# EUROPEAN PATENT APPLICATION

(11) **EP 4 685 555 A1**
(43) Date of publication of application: **28.01.2026**
(21) Application number: 24775270.2
(22) Date of filing: 18.03.2024
(51) Int. Cl.: G03B 5/04, G03B 3/10, G03B 13/36, G03B 17/12, H04N 23/54, H04N 23/55, H02K 41/035

(54) **CAMERA ACTUATOR AND CAMERA MODULE COMPRISING SAME**

(30) Priority: 21.03.2023 KR 20230036306
(71) Applicant: LG INNOTEK CO. LTD, Gangseo-gu Seoul 07796 (KR)
(72) Inventor: LEE, Hae Jun, Seoul 07796 (KR); LEE, Hee Se, Seoul 07796 (KR)
(74) Representative: DREISS Patentanwälte PartG mbB
(86) International application number: PCT/KR2024/095582
(87) International publication number: WO 2024/196225

(57) **Abstract**

A camera actuator according to an embodiment of the present invention comprises: a housing; a first bobbin moving in an optical axis direction within the housing; and a drive unit moving the first bobbin. The first bobbin comprises: a first lens holder accommodating a lens; a guiding unit facing the housing; and a bonding member arranged between the first lens holder and the guiding unit.

## Description

### [Technical Field]

The present invention relates to a camera actuator and a camera module including the same.

### [Background Art]

Cameras are devices which capture photos or videos of subjects and are installed in portable devices, drones, vehicles, and the like. Camera modules may have an image stabilization (IS) function of correcting or preventing image shaking caused by a user's movement, an auto-focus function of automatically adjusting a gap between an image sensor and a lens to align the focal length of the lens, and a zoom function of increasing or decreasing the magnification of a distant subject using a zoom lens to improve the quality of the images.

Here, there is a problem of performance deterioration of lenses in camera modules due to long movements of the lenses.

### [Disclosure]

### [Technical Problem]

A technical problem to be solved by embodiments of the present invention is to provide a camera actuator and a camera module with improved optical performance by facilitating optical axis alignment (AA) for a bobbin.

Also, embodiments of the present invention may provide a camera actuator and a camera module which provide efficient performance enhancement with angle correction for a first bobbin with a long movement distance or stroke.

Furthermore, embodiments of the present invention may provide a camera actuator and a camera module having an improved coupling force between a lens holder of a bobbin and a guiding unit.

Embodiments of the present invention are to provide a camera actuator applicable to ultra-slim, ultra-small, and high-resolution cameras.

The problems to be solved by the embodiments are not limited thereto, and purposes or effects which may be grasped from solutions or embodiments of the problems to be described below are also included.

### [Technical Solution]

A camera actuator according to an embodiment of the present invention includes: a housing; a first bobbin disposed in the housing; and a driving unit configured to move the first bobbin in an optical axis direction, in which the first bobbin includes: a first lens holder configured to accommodate a lens; a first guiding unit disposed on a side portion of the housing; and a bonding member disposed between the first lens holder and the first guiding unit.

The first lens holder may include a first surface that comes into contact with the bonding member, and
the first guiding unit may include a second surface that comes into contact with the bonding member.

The first surface may include a first groove, and the second surface of the first guiding unit may include a second groove.

The first groove and the second groove may overlap in a direction from the first surface toward the second surface.

The first surface may include a first protrusion which is disposed in the first groove, and the second surface may include a second protrusion which is disposed in the second groove.

The first protrusion and the second protrusion may overlap in the direction from the first surface toward the second surface.

The first guiding unit may include a third surface which is disposed opposite to the second surface, and the third surface of the first guiding unit may face the side portion of the housing and include a recess in which a ball is disposed.

The side portion of the housing may include a first side portion having an inner surface facing the first guiding unit of the first bobbin and a second side portion opposite to the first side portion.

The housing may include an upper surface and a lower surface which are disposed between the first side portion and the second side portion, the upper surface may include a first hole, and the lower surface may include a second hole.

The bonding member may be exposed through at least one of the first hole and the second hole.

A first portion of the first guiding unit may be exposed through at least one of the first hole and the second hole.

A second portion located on a side portion of the first portion of the first guiding unit and the housing may overlap in a direction from the first hole toward the second hole.

The bonding member may be disposed between the first protrusion and the second protrusion and may be disposed between the first groove and the second groove.

A second bobbin which is disposed spaced apart in the optical axis direction from the first bobbin may be provided and the second bobbin may include: a second lens holder; and a second guiding unit which extends in the first direction from the second lens holder and is directly connected to the second lens holder

A camera actuator according to an embodiment includes: a housing; a bobbin which is disposed in the housing; and a driving unit which moves the bobbin in an optical axis direction, in which the bobbin includes: a lens holder; and a guiding unit which is disposed on a side portion of the housing, the lens holder includes a first surface, the guiding unit includes a second surface which is connected to the first surface, and the first surface and the second surface are disposed at an angle to each other.

The optical axis direction and the second surface may be disposed at an angle to each other.

The bobbin may include a bonding member which is disposed between the lens holder and the guiding unit, and a first bonding member and a second bonding member which are positioned spaced apart from each other in the optical axis direction of the bonding member may have different thicknesses.

A third bonding member and a fourth bonding member which are positioned spaced apart in a direction perpendicular to the optical axis direction of the bonding member may have different thicknesses.

A camera actuator according to an embodiment includes: a housing; a bobbin which is disposed in the housing; and a driving unit which moves the bobbin in an optical axis direction, in which the bobbin includes: a lens holder which has a lens accommodated therein; and a guiding unit which is disposed on a side portion of the housing and a center axis of the lens holder is adjusted with respect to the guiding unit.

The bobbin may include a bonding member which is disposed between the lens holder and the guiding unit and an optical axis of the lens holder may be adjusted with respect to the guiding unit.

### [Advantageous Effects]

According to an embodiment of the present invention, a camera actuator and a camera module with improved optical performance can be implemented by facilitating optical axis alignment (AA) for a bobbin.

Also, embodiments of the present invention can implement a camera actuator and a camera module which provide efficient performance improvement with angle correction for a first bobbin with a long movement distance or stroke.

Furthermore, embodiments of the present invention can implement a camera actuator and a camera module having an improved coupling force between a lens holder of a bobbin and a guiding unit.

Embodiments of the present invention can implement a camera actuator applicable to ultra-slim, ultra-small, and high-resolution cameras.

Various useful advantages and effects of the present invention are not limited to the above-described contents, and can be more easily understood in a process of describing specific embodiments of the present invention.

### [Description of Drawings]

FIG. 1 is a perspective view of a camera module according to an embodiment.
FIG. 2 is an exploded perspective view of the camera module according to the embodiment.
FIG. 3 is a cross-sectional view along line AA' in FIG. 1.
FIG. 4 is a perspective view of a second camera actuator according to the embodiment.
FIG. 5 is an exploded perspective view of the second camera actuator according to the embodiment.
FIG. 6 is a cross-sectional view along line DD' in FIG. 4.
FIGS. 7A, 7B, and 7C are perspective views of a housing in the second camera actuator according to the embodiment.
FIGS. 8 and 9 are views for describing each driving of a lens assembly according to the embodiment.
FIG. 10 is a view for describing the operation of the second camera actuator according to the embodiment.
FIG. 11 is a perspective view of a part of a configuration of the second camera actuator according to the embodiment.
FIG. 12 is a view showing an optical driving coil, an optical driving magnet, and a yoke according to the embodiment.
FIG. 13 is a view for describing movement of the optical driving magnet using a driving unit according to the embodiment.
FIG. 14 is a perspective view of a first lens assembly, a first coupling member, a second coupling member, and a second lens assembly according to the embodiment.
FIG. 15 is an exploded perspective view of a first lens assembly according to the embodiment.
FIG. 16 is a perspective view of the first lens assembly according to the embodiment.
FIG. 17 is another perspective view of the first lens assembly according to the embodiment.
FIG. 18 is a view for describing a structure of a first lens holder and a guiding unit in the first lens assembly according to the embodiment.
FIG. 19 is a cross-sectional view along line II' in FIG. 16.
FIG. 20 is a top view of the second camera actuator according to the embodiment.
FIG. 21 is a view showing the inside of the housing in the second camera actuator according to the embodiment.
FIG. 22 is a bottom view of the second camera actuator according to the embodiment.
FIG. 23 is a view showing the inside of the housing in the second camera actuator according to the embodiment.
FIG. 24 is a view for describing the combining of the lens holder and the guiding unit in the first lens assembly of the second camera actuator according to the embodiment.
FIG. 25 is a graph showing spatial frequency responses (SFRs) in wide and tele states after optical axis alignment (active alignment) according to movement of a fixed assembly and the first lens assembly.
FIG. 26 is a top view of a second camera actuator according to another embodiment.
FIG. 27 is a top view of a second camera actuator according to still another embodiment.
FIG. 28 is a schematic diagram showing a circuit board according to an embodiment.
FIG. 29 is a perspective view of a mobile terminal to which a camera module according to an embodiment is applied.
FIG. 30 is a perspective view of a vehicle to which the camera module according to the embodiment is applied.

### [Modes of the Invention]

The present invention may have various modifications and embodiments and specific embodiments are exemplified in the drawings and described. Here, this is not intended to limit the present invention to specific embodiments, but should be understood to include all modifications, equivalents, or substitutes included in the spirit and technical scope of the present invention.

Although terms that include ordinal numbers such as second and first may be used for describing various constituent elements, the constituent elements are not limited by these terms. These terms are used only for distinguishing one constituent element from another. For example, without departing from the scope of the present invention, a second constituent element could be named a first constituent, and similarly, the first constituent element could also be named the second constituent element. The term and/or includes any combination of a plurality of related described items or any item among the plurality of related described items.

When it is said that a constituent element is "connected" or "coupled" to another constituent element, although it should be understood that it may be directly connected or coupled to that other constituent element, another constituent element may also be present therebetween. On the other hand, when it is said that any constituent element is "directly connected" or "directly coupled" to another constituent element, it should be understood that another constituent element is not present therebetween.

The terminology used in this application is used only for describing specific embodiments and is not intended to limit the present invention. Singular expressions include plural expressions unless the context clearly indicates otherwise. In this application, it should be understood that terms such as terms "include" or "have" are intended to specify the presence of a feature, a number, a step, an operation, a constituent element, a part or a combination thereof described in the specification, but do not exclude in advance the possibility of the presence or the addition of one or more of other features, numbers, steps, operations, constituent elements, parts or combinations thereof.

Unless otherwise defined, all terms used herein, including technical or scientific terms, have the same meaning as commonly understood by one of ordinary skill in the art to which this invention belongs. Terms defined in commonly used dictionaries should be interpreted as having a meaning consistent with their meaning in the context of the relevant art, and will not be interpreted in an idealized or overly formal sense, unless expressly defined otherwise in this application.

Hereinafter, embodiments will be described in detail with reference to the attached drawings. Regardless of the drawing symbols, the same or corresponding constituent elements are denoted by the same reference numerals and redundant descriptions thereof will be omitted.

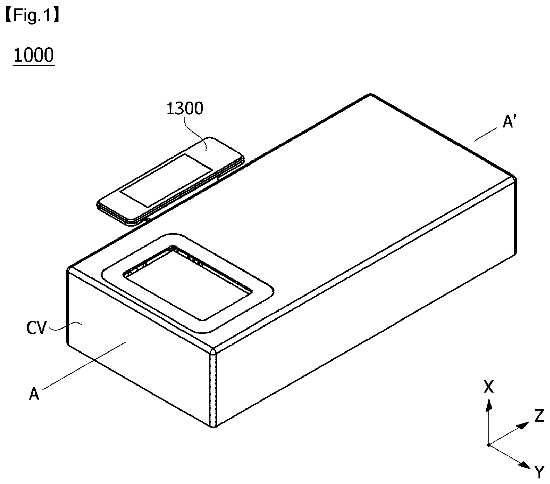

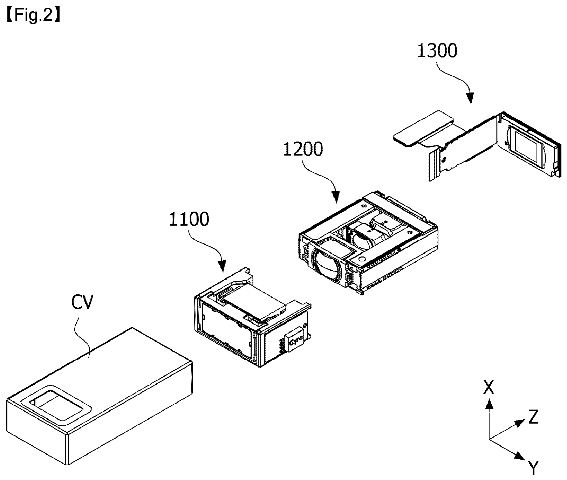

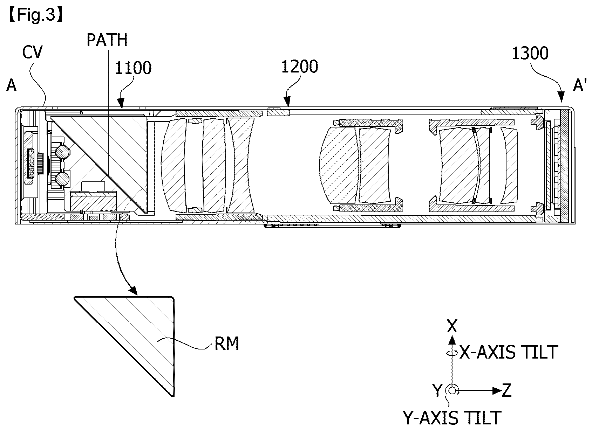

FIG. 1 is a perspective view of a camera module according to an embodiment, FIG. 2 is an exploded perspective view of the camera module according to the embodiment, and FIG. 3 is a cross-sectional view along line AA' in FIG. 1.

Referring to FIGS. 1 and 2, a camera module 1000 according to an embodiment may be composed of a cover CV, a first camera actuator 1100, a second camera actuator 1200, and a circuit board 1300. Here, the first camera actuator 1100 may be used interchangeably with a first actuator and the second camera actuator 1200 may be used interchangeably with a second actuator.

The cover CV may cover the first camera actuator 1100 and the second camera actuator 1200. A coupling force between the first camera actuator 1100 and the second camera actuator 1200 may be improved using the cover CV.

Furthermore, the cover CV may be made of a material that performs electromagnetic shielding. Thus, the first camera actuator 1100 and the second camera actuator 1200 in the cover CV may be easily protected.

Further, the first camera actuator 1100 may be an optical image stabilization (OIS) actuator. For example, the first camera actuator 1100 may move an optical member in a direction perpendicular to an optical axis (an axis of incident light).

The first camera actuator 1100 may include a fixed focal length lens disposed in a predetermined barrel (not shown). The fixed focal length lens may also be referred to as a "single focal length lens" or a "prime lens."

The first camera actuator 1100 may change an optical path. In an embodiment, the first camera actuator 1100 may vertically change the optical path through an internal optical member (for example, a prism or a mirror). For example, the optical member may change a direction of light from a first direction (X-axis direction) to a third direction (Z-axis direction). Alternatively, the optical member may change an axis of light from a first axis to a second axis. With this configuration, a configuration of lenses having sizes greater than a thickness of a mobile terminal may be disposed in the mobile terminal to perform magnification, auto-focus (AF), zoom, and OIS functions, even though the thickness of the mobile terminal is reduced, by changing the optical path.

Here, the present invention is not limited thereto and the first camera actuator 1100 may change the optical path vertically or at a predetermined angle multiple times.

The second camera actuator 1200 may be disposed at a rear end of the first camera actuator 1100. The second camera actuator 1200 may be coupled to the first camera actuator 1100. Further, the second camera actuator 1200 and the first camera actuator 1100 may be coupled in various ways.

Furthermore, the second camera actuator 1200 may be a zoom actuator or an AF actuator. For example, the second camera actuator 1200 may support one or a plurality of lenses and move the lenses in response to a control signal from a predetermined control unit to perform an auto-focus function or a zoom function.

Further, one or a plurality of lenses may move independently or individually in the optical axis direction and

the circuit board 1300 may be disposed at a rear end of the second camera actuator 1200. The circuit board 1300 may be electrically connected to the second camera actuator 1200 and the first camera actuator 1100. Moreover, a plurality of circuit boards 1300 may be provided.

The camera module according to the embodiment may be composed of one or a plurality of camera modules. For example, the plurality of camera modules may include a first camera module and a second camera module.

Further, the first camera module may include one or a plurality of actuators. For example, the first camera module may include the first camera actuator 1100 and the second camera actuator 1200.

Further, the second camera module may be disposed in a predetermined housing (not shown) and include an actuator (not shown) capable of driving a lens unit. The actuator may be a voice coil motor, a micro actuator, a silicon actuator, or the like and applied in various ways such as capacitive, thermal, bimorph, and electrostatic methods, but not limited thereto. In addition, in this specification, the camera actuator may be referred to as an actuator or the like. In addition, a camera module composed of a plurality of camera modules may be installed in various electronic devices, such as mobile terminals. Furthermore, the actuator may be a device for moving or tilting a lens and an optical member. Here, in the following description, the actuator is described as a concept in which the actuator includes a lens or an optical member. Furthermore, the actuator may be referred to as a 'lens transfer device,' a 'lens movement device,' an 'optical member transfer device,' an 'optical member movement device,' or the like.

Referring to FIG. 3, the camera module according to the embodiment may include the first camera actuator 1100 that performs an OIS function and the second camera actuator 1200 that performs zoom and AF functions.

Light may be incident into the camera module or the first camera actuator through an opening region located in an upper surface of the first camera actuator 1100. That is, light may be first incident into the first camera actuator 1100 in a vertical direction (for example, the X-axis direction, based on incident light), and the optical path may be changed to the optical axis direction (for example, the Z-axis direction) through the optical member. Further, light may pass through the second camera actuator 1200 and may be incident on an image sensor IS located at one end of the second camera actuator 1200 (PATH). In this specification, the Z-axis direction or the third direction is described as the optical axis direction as follows. Also, the first direction or the X-axis direction is described as the vertical direction. Further, the second direction or the Y-axis direction is described as a horizontal direction.

In this specification, a bottom surface means one side in the first direction. Further, the first direction is the X-axis direction in the drawing and may be used interchangeably with a second-axis direction or the like. The second direction is the Y-axis direction in the drawing and may be used interchangeably with a first-axis direction or the like. The second direction is a direction perpendicular to the first direction. Also, the third direction is the Z-axis direction in the drawing and may be used interchangeably with a third-axis direction or the like. Further, the third direction is a direction perpendicular to both the first and second directions. Here, the third direction (Z-axis direction) corresponds to a direction of the optical axis, and the first direction (X-axis direction) and the second direction (Y-axis direction) are directions perpendicular to the optical axis. Also, the following description of the first and second camera actuators is made based on the optical axis direction being the third direction (Z-axis direction).

Furthermore, in this specification, an inner side may be a side in a direction from the cover CV toward the first camera actuator, and an outer side may be a side in a direction opposite to that of the inner side. That is, the first camera actuator and the second camera actuator may be located inside the cover CV, and the cover CV may be located outside the first camera actuator or the second camera actuator.

Further, with this configuration, the camera module according to the embodiment can improve the spatial limitations of the first camera actuator and the second camera actuator by changing the optical path. That is, the camera module according to the embodiment can expand the optical path while minimizing the thickness of the camera module in response to a change in the optical path. Furthermore, it should be understood that the second camera actuator can also provide a high range of magnification by controlling a focus or the like in the expanded optical path.

Furthermore, the camera module according to the embodiment can implement OIS through control of the optical path via the first camera actuator, thereby minimizing the occurrence of decentralization or tilt phenomena and producing the best optical characteristics.

Furthermore, the second camera actuator 1200 may include an optical system and a lens driving unit. For example, at least one of a first lens assembly, a second lens assembly, and a third lens assembly may be disposed in the second camera actuator 1200.

Also, the second camera actuator 1200 may include a coil and a magnet to perform a high magnification zoom function and an auto-focus function.

For example, although the first lens assembly and the second lens assembly may be moving lenses that move via coils, magnets, and guide pins, and the third lens assembly may be a fixed lens, the present invention is not limited thereto. For example, the third lens assembly may function as a focator that forms a light image on a specific location, and the first lens assembly may function as a variator that reforms the image formed in the third lens assembly, which is a focator, on a different location. On the other hand, the first lens assembly may have a significant change in magnification due to a significant change in a distance to the subject or an image distance, and the first lens assembly, which is a variator, may play an important role in the focal length or magnification change of the optical system. Meanwhile, an image point that is formed in the first lens assembly, which is a variator, may vary slightly depending on the location thereof. Thus, the second lens assembly may perform a location compensation function for the image formed using the variator. For example, the second lens assembly may function as a compensator, which functions to accurately form the image point formed in the first lens assembly, which is a variator, on an actual position of the image sensor. For example, the first lens assembly and the second lens assembly may be driven using an electromagnetic force due to the interaction of the coil and the magnet. The above description can be applied to the lens assembly which will be described below. Furthermore, the first lens assembly to the third lens assembly may move in the optical axis direction, that is, the third direction. Further, the first lens assembly to the third lens assembly may move in the third direction independently or dependently. In the present invention, the first lens assembly and the second lens assembly may move in the optical axis direction. Further, the third lens assembly may be located at a front end of the first lens assembly or at a rear end of the second lens assembly. Further, the third lens assembly may not move in the optical axis direction. That is, the third lens assembly may be a fixed unit. Furthermore, the first and second lens assemblies may be moving units.

Meanwhile, when an actuator for OIS and an actuator for AF/zoom are disposed in accordance with the embodiment of the present invention, magnetic interference with a magnet for AF/zoom may be prevented when driving the OIS. Since a first driving magnet of the first camera actuator 1100 is disposed separately from the second camera actuator 1200, magnetic interference between the first camera actuator 1100 and the second camera actuator 1200 may be prevented. In this specification, OIS may be interchangeably referred to as the terms such as image stabilization, optical image stabilization, optical image correction, and shake correction.

Particularly, in the first camera actuator 1100, an optical member RM may be tilted with respect to the X-axis or the Y-axis. Accordingly, it is possible to easily change the optical path in accordance with the X-axis tilt or the Y-axis tilt.

The optical member RM may be seated in a holder of the first camera actuator. In an embodiment, the optical member RM may be formed of a mirror or a prism. Although the following description is made based on the optical member RM which is formed of a prism, the optical member RM may also be formed of a plurality of lenses as in the above-described embodiment. Alternatively, the optical member RM may be formed of a plurality of lenses and prisms or mirrors. Further, the optical member RM may include a reflector disposed therein. Here, the present invention is not limited thereto.

In the first camera actuator 1100, the optical member RM may be tilted with respect to the X-axis or the Y-axis by driving a VCM or the like. That is, OIS may be implemented by tilting or rotating the optical member RM with respect to the Y-axis direction or the X-axis direction.

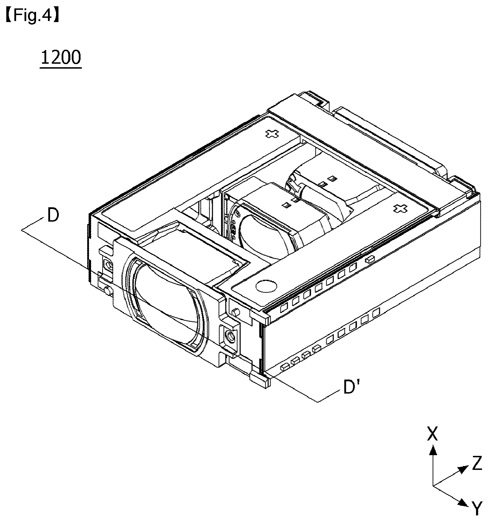

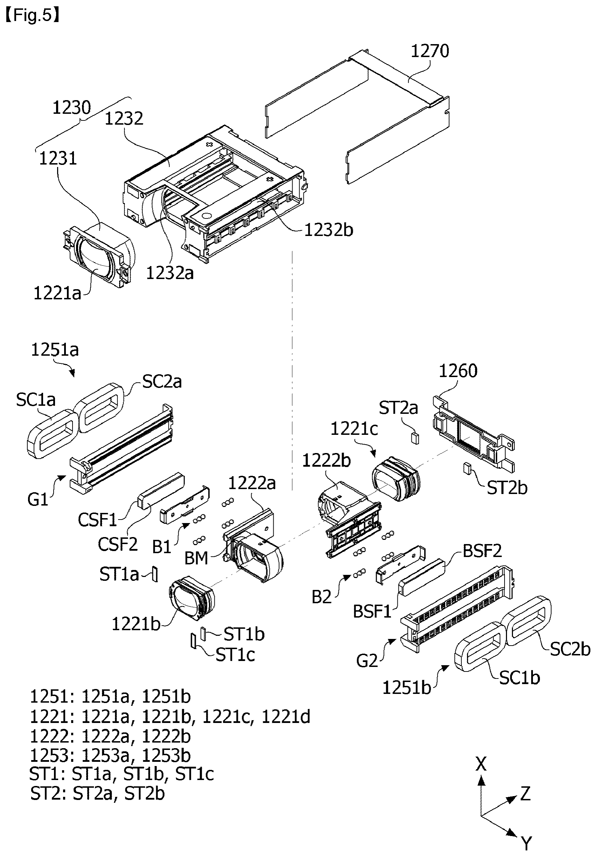

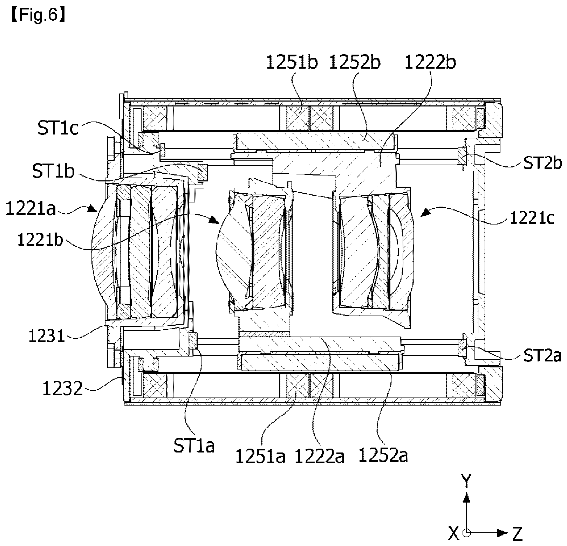

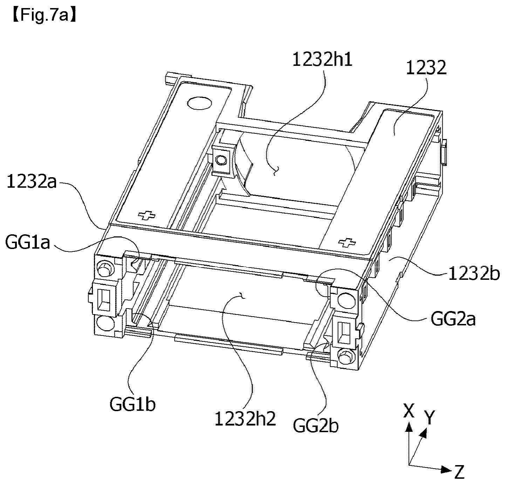

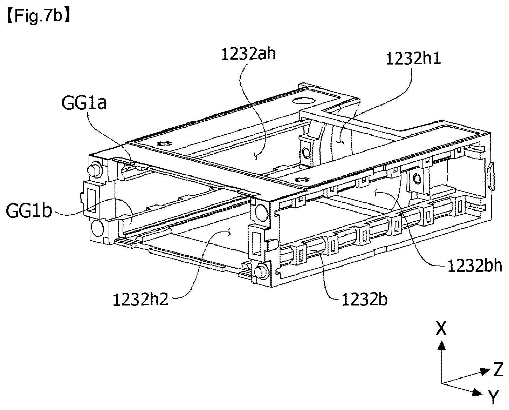

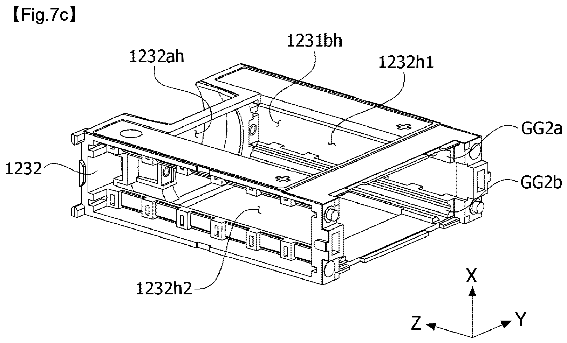

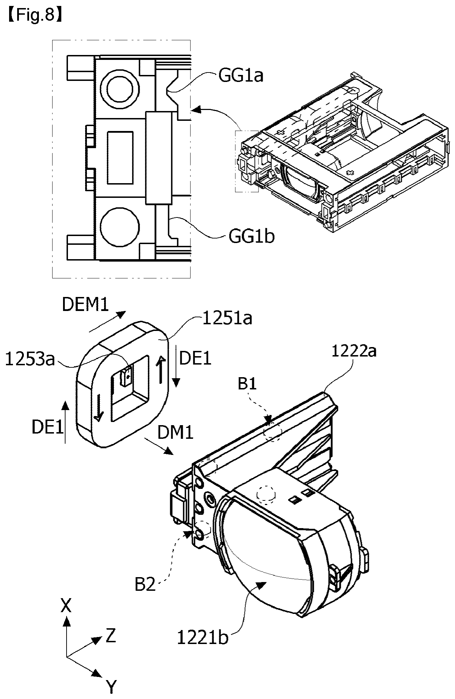

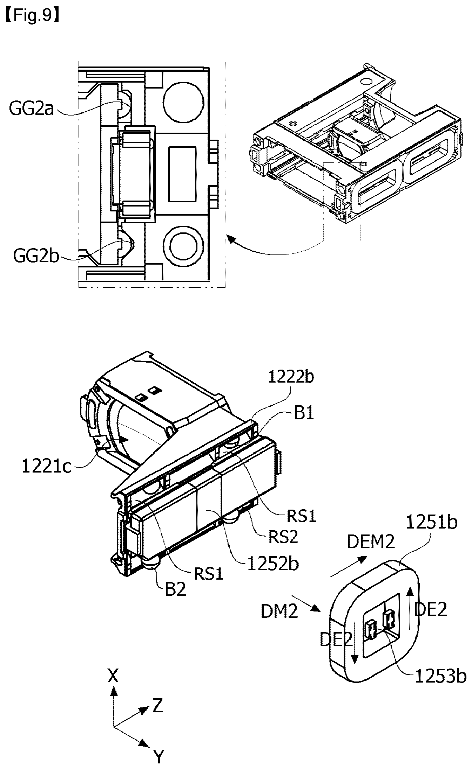

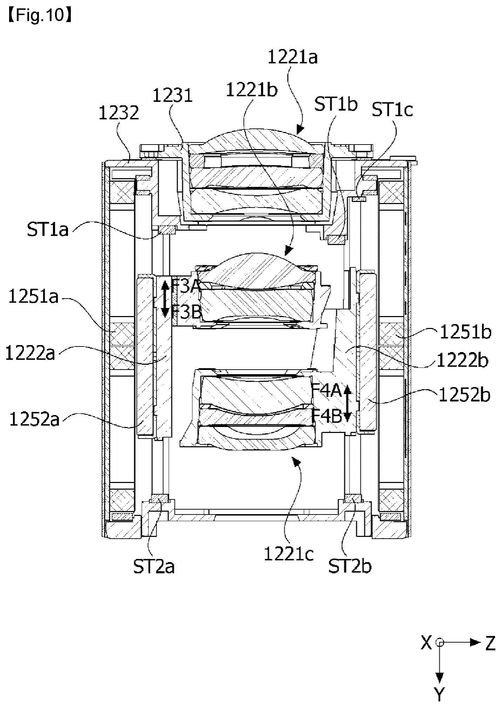

FIG. 4 is a perspective view of a second camera actuator according to the embodiment, FIG. 5 is an exploded perspective view of the second camera actuator according to the embodiment, FIG. 6 is a cross-sectional view along line DD' in FIG. 4, FIGS. 7A, 7B, and 7C are perspective views of a housing in the second camera actuator according to the embodiment, FIGS. 8 and 9 are views for describing each driving of a lens assembly according to the embodiment, and FIG. 10 is a view for describing the operation of the second camera actuator according to the embodiment.

Referring to FIGS. 4 to 6, the second camera actuator 1200 (or the camera device, the zoom lens transfer device, the zoom lens movement device, or the lens transfer device) according to the embodiment may include a lens unit 1220, a housing 1230, a driving unit 1250, a base unit 1260, a substrate unit 1270, and stoppers ST1 and ST2. Furthermore, the second camera actuator 1200 may further include a shield can (not shown), elastic units (not shown), and a coupling member (not shown).

In addition, a lens group may move in the optical axis direction, as will be described below. Further, the lens group may be coupled to the lens assembly and move together in the optical axis direction. In this case, the second camera actuator may include a moving unit that moves in the optical axis direction, like the lens group, and a fixed unit that does not move in the optical axis direction and is relatively fixed, unlike the moving unit. In this embodiment, the moving unit may include lens assemblies (for example, first and second lens assemblies) and optical driving magnets (first and second driving magnets). Further, the fixed unit may include a housing, a substrate unit, optical driving coils (first and second coils), and a Hall sensor. Furthermore, a driving magnet may be disposed on any one of the moving unit and the fixed unit, and a driving coil may be disposed on the other. In response to this description, a movement distance of the lens assembly, which will be described below, may correspond to a movement distance of the moving unit.

The shield can (not shown) may be located in one region (for example, the outermost region) of the second camera actuator 1200 to surround constituent elements which will be described below (the lens unit 1220, the housing 1230, the driving unit 1250, the base unit 1260, the substrate unit 1270, and an image sensor IS which is disposed on a circuit board at a rear end thereof).

The shield can (not shown) may block or reduce the electromagnetic waves generated from the outside. Accordingly, the occurrence of malfunctions in the driving unit 1250 can be reduced.

The lens unit 1220 may be located in the shield can (not shown). The lens unit 1220 may move in the third direction (Z-axis direction or optical axis direction). Accordingly, the AF function or the zoom function described above may be performed.

Additionally, the lens unit 1220 may be located in the housing 1230. Accordingly, at least a part of the lens unit 1220 may move in the housing 1230 in the optical axis direction or the third direction (Z-axis direction).

Specifically, the lens unit 1220 may include a lens group 1221 and a moving assembly 1222.

First, the lens group 1221 may include one or more lenses. Additionally, although a plurality of lens groups 1221 may be provided, the following description is made based on one lens group.

The lens group 1221 may be coupled to the moving assembly 1222 and may move in the third direction (Z-axis direction) using the electromagnetic force generated from a first magnet 1252a and a second magnet 1252b coupled to the moving assembly 1222.

In an embodiment, the lens group 1221 may include a first lens group 1221a, a second lens group 1221b, and a third lens group 1221c. The first lens group 1221a, the second lens group 1221b, and the third lens group 1221c may be sequentially arranged in the optical axis direction. Furthermore, the lens group 1221 may further include a fourth lens group. The fourth lens group may be disposed at a rear end of the third lens group 1221c.

The first lens group 1221a may be coupled and fixed to a 1-1 housing (or fixed assembly). In other words, the first lens group 1221a may not move in the optical axis direction.

The second lens group 1221b may be coupled to a first lens assembly 1222a and may move in the third direction or the optical direction. Magnification adjustment may be performed by moving the first lens assembly 1222a and the second lens group 1221b.

The third lens group 1221c may be coupled to a second lens assembly 1222b and may move in the third direction or the optical axis direction. Focus adjustment or auto-focus may be performed by moving the third lens group 1221.

Here, the number of lens groups is not limited, and the fourth lens group described above may not be present, or an additional lens group or the like other than the fourth lens group 1121d may be disposed.

The moving assembly 1222 may include an opening region that surrounds the lens group 1221. The moving assembly 1222 may be used interchangeably with the first and second lens assemblies. The moving assembly 1222 or the lens assembly may move in the optical axis direction (Z-axis direction) in the housing 1230. Further, the moving assembly 1222 may be coupled to the lens group 1221 in various ways. Additionally, the moving assembly 1222 may include a groove in a side surface thereof and may be coupled to the first magnet 1252a and the second magnet 1252b through the groove. A coupling member or the like may be applied to the groove.

Additionally, the moving assembly 1222 may be coupled to elastic units (not shown) at upper and rear ends thereof. Accordingly, the moving assembly 1222 may move in the third direction (Z-axis direction) while supported by the elastic units (not shown). That is, the position of the moving assembly 1222 may be maintained and the direction of the moving assembly 1222 may be maintained in the third direction (in the Z-axis direction). The elastic units (not shown) may be formed of various elastic elements, such as a plate spring.

The moving assembly 1222 may be located in the housing 1230 and include the first lens assembly 1222a and the second lens assembly 1222b.

A region where the third lens group is seated in the second lens assembly 1222b may be located at a rear end of the first lens assembly 1222a. In other words, the region where the third lens group 1221c is seated in the second lens assembly 1222b may be located between a region where the second lens group 1221b is seated in the first lens assembly 1222a and the image sensor.

The first lens assembly 1222a and the second lens assembly 1222b may face first and second guide grooves, respectively. The first guide groove and the second guide groove may be located in a first side portion 1232a and a second side portion 1232b of the housing 1230 (or 1-2 housing) which will be described below. For example, the first guide groove and the second guide groove may be formed in the first and second side portions of the housing, respectively. Alternatively, members including the first guide groove and the second guide groove may be located in the first and second side portions of the housing, respectively.

Further, the optical driving magnets may be seated on outer surfaces of the first lens assembly 1222a and the second lens assembly 1222b. For example, the second magnet 1252b may be seated on the outer surface of the second lens assembly 1222b. The first magnet 1252a may be seated on the outer surface of the first lens assembly 1222a. In this specification, the first lens assembly 1222a may be interchangeably referred to as a 'first bobbin.' The second lens assembly 1222b may be interchangeably referred to as a 'second bobbin.' Further, the first bobbin 1222a may include a guiding unit, a first lens holder, and a bonding member. A detailed description thereof will be provided below.

The housing 1230 may be disposed between the lens unit 1220 and the shield can (not shown). Further, the housing 1230 may be disposed to surround the lens unit 1220.

The housing 1230 may include a 1-1 housing 1231 and a 1-2 housing 1232. The 1-1 housing 1231 may be coupled to the first lens group 1221a and may also be coupled to the first camera actuator described above. The 1-1 housing 1231 may be located in front of the 1-2 housing 1232. The 1-1 housing may be referred to as a "fixed assembly," a "fixed lens assembly," a "fixed lens accommodating unit," or the like. The 1-2 housing may be referred to as a 'main barrel,' a 'lens barrel,' a 'barrel,' or the like.

Further, the 1-2 housing 1232 may be located at a rear end of the 1-1 housing 1231. The first and second lens assemblies and the lens unit 1220 may be seated inside the 1-2 housing 1232.

The housing 1230 (or the 1-2 housing 1232) may have holes formed in side portions thereof. A first coil 1251a and a second coil 1251b may be disposed in the holes. The holes may be positioned to correspond to the grooves in the moving assembly 1222 described above. In this case, a plurality of first coils 1251a and a plurality of second coils 1251b may be provided.

In an embodiment, the housing 1230 (particularly, the 1-2 housing 1232) may include a first side portion 1232a and a second side portion 1232b. The first side portion 1232a and the second side portion 1232b may be positioned to correspond to each other. For example, the first side portion 1232a and the second side portion 1232b may be symmetrically disposed with respect to the third direction. An optical driving coil 1251 may be located on the first side portion 1232a and the second side portion 1232b. Further, the substrate unit 1270 may be seated on outer surfaces of the first side portion 1232a and the second side portion 1232b. In other words, a first substrate may be located on the outer surface of the first side portion 1232a, and a second substrate may be located on the outer surface of the second side portion 1232b.

Furthermore, the first guide groove and the second guide groove may be located in the first side portion 1232a and the second side portion 1232b of the housing 1230 (particularly, the 1-2 housing 1232).

The first guide groove and the second guide groove may be one or more grooves (for example, guide grooves) or recesses. Further, a first ball B1 or a second ball B2 may be seated in the first or second guide groove of the grooves or recesses. The second camera actuator 1200 may further include a ball unit. The ball unit may include the first ball B1 and the second ball B2. By means of the ball unit, the first and second lens assemblies may move in the optical axis direction. In this case, the ball unit may include one or more rolling members and balls. Further, one or more balls may move along the first or second guide groove. Accordingly, the first ball B1 or the second ball B2 may move in the third direction (Z-axis direction) in the first guide groove or the second guide groove.

Alternatively, the first ball B1 or the second ball B2 may move in the third direction along a guide unit or rail coupled to an inner side of the first side portion 1232a of the housing 1230, or along a guide unit or rail coupled to an inner side of the second side portion 1232b of the housing 1230.

Thus, the first lens assembly 1222a and the second lens assembly 1222b may move in the third direction or the optical axis direction. In this case, the second lens assembly 1222b may be disposed further adjacent or closer to the image sensor than the first lens assembly 1222a.

According to the embodiment, the first ball B1 may come into contact with the first lens assembly 1222a. The second ball B2 may come into contact with the second lens assembly 1222b. Thus, the first ball B1 and the second ball B2 may overlap at least partially in the first direction (X-axis direction) depending on the position thereof.

Furthermore, the guide grooves may include first guide grooves GG1a and GG1b facing a first recess. Furthermore, the guide grooves may include second guide grooves GG2a and GG2b facing a second recess RS2. The first guide grooves GG1a and GG1b and the second guide grooves GG2a and GG2b may be grooves extending in the third direction (Z-axis direction). Further, a plurality of first guide grooves GG1a and GG1b and a plurality of second guide grooves GG2a and GG2b may be provided. Further, the plurality of first guide grooves (or second guide grooves) may be grooves having different shapes. For example, one of the grooves may be a groove with inclined side surfaces, while the other may be a groove with side surfaces perpendicular to the bottom surface. Further, a plurality of balls having at least some different diameters may be located in the plurality of guide grooves.

The second magnet 1252b may be positioned to face the second coil 1251b. Furthermore, the first magnet 1252a may be positioned to face the first coil 1251a.

For example, at least one of the first coil 1251a and the second coil 1251b may be composed of one or more coils. For example, the first coil 1251a may be composed of a plurality of coils. The second coil 1251b may be composed of a plurality of coils. Furthermore, even if the first coil and the second coil are one coil, a long stroke which will be described below may be implemented.

In an embodiment, the optical driving coil 1251 may be composed of sub-coils sequentially arranged in the optical axis direction (Z-axis direction). For example, the plurality of sub-coils may be sequentially arranged in the optical axis direction on each side of the main barrel 1232.

In this embodiment, the optical driving coil 1251 may include a first driving unit and a second driving unit. The first driving unit may provide a driving force which moves the first lens assembly 1222a in the optical axis direction. The first driving unit may include the first coil 1251a and the first magnet 1252a. Furthermore, the first driving unit may include a first driving coil and a first driving magnet. Accordingly, the first coil 1251a may be referred to as a 'first driving coil.' Further, the first magnet 1252a may be referred to as a 'first driving magnet.'

Further, the second driving unit may provide a driving force which moves the second lens assembly 1222b in the optical axis direction. The second driving unit may include the second coil 1251b and the second magnet 1252b.

Furthermore, the second driving unit may include a second driving coil and a second driving magnet. Accordingly, the second coil 1251b may be referred to as a 'second driving coil.' Further, the second magnet 1252b may be referred to as a 'second driving magnet.'

The elastic units (not shown) may include a first elastic member (not shown) and a second elastic member (not shown). The first elastic member (not shown) may be coupled to an upper surface of the moving assembly 1222. The second elastic member (not shown) may be coupled to a lower surface of the moving assembly 1222. Furthermore, the first elastic member (not shown) and the second elastic member (not shown) are formed as plate springs as described above. Additionally, the first elastic member (not shown) and the second elastic member (not shown) may provide elasticity for movement of the moving assembly 1222. However, the present invention is not limited to the above-described positions, and the elastic units may be disposed at various positions.

Further, the driving unit 1250 may provide a driving force which moves the lens unit 1220 in the third direction (Z-axis direction). The driving unit 1250 may include the optical driving coil 1251 and the optical driving magnet 1252. The optical driving coil 1251 and the optical driving magnet 1252 may be positioned to face each other. For example, the first driving coil 1251a and the first driving magnet 1252a may be positioned to face each other. Furthermore, the second driving coil 1251b and the second driving magnet 1252b may be positioned to face each other. The first driving coil 1251a may be disposed on one side in the second direction in the housing, and the second driving coil 1251b may be disposed on the other side in the second direction in the housing.

Furthermore, the driving unit 1250 may further include a Hall sensor unit. A Hall sensor unit 1253 may include one or more first Hall sensors 1253a and second Hall sensors 1253b, and may be located inside or outside the optical driving coil 1251.

The moving assembly may move in the third direction (Z-axis direction) using the electromagnetic force formed between the optical driving coil 1251 and the optical driving magnet 1252.

The optical driving coil 1251 may include the first coil 1251a and the second coil 1251b. Furthermore, as described above, the first coil 1251a and the second coil 1251b may be composed of a plurality of sub-coils. Additionally, the first coil 1251a and the second coil 1251b may be disposed in holes formed in the side portions of the housing 1230. Further, the first coil 1251a and the second coil 1251b may be electrically connected to the substrate unit 1270. Accordingly, the first coil 1251a and the second coil 1251b may receive a current or the like supplied through the substrate unit 1270.

Further, the optical driving coil 1251 may be coupled to the substrate unit 1270 through a yoke or the like.

Furthermore, in an embodiment, the optical driving coil 1251 is a fixed element together with the substrate unit 1270. On the other hand, the optical driving magnet 1252 is a moving element that moves in the optical axis direction (Z-axis direction) together with the first and second assemblies.

The optical driving magnet 1252 may include the first magnet 1252a and the second magnet 1252b.

In an embodiment, the first coil 1251a may include a first sub-coil SC1a and a second sub-coil SC2a. The first sub-coil SC1a and the second sub-coil SC2a may be sequentially arranged in the optical axis direction. The first sub-coil SC1a may be positioned closer to the first camera actuator than the second sub-coil SC2a.

Further, the second coil 1251b may include a third sub-coil SC1b and a fourth sub-coil SC2b. The third sub-coil SC1b and the fourth sub-coil SC2b may be sequentially arranged in the optical axis direction. The third sub-coil SC1b may be positioned closer to the first camera actuator than the fourth sub-coil SC2b.

Further, the first magnet 1252a may face the first sub-coil SC1a and the second sub-coil SC2a. The second magnet 1252b may face the third sub-coil SC1b and the fourth sub-coil SC2b. The first sub-coil SC1a may be positioned to overlap the third sub-coil SC1b in the second direction. The second sub-coil SC2a may be positioned to overlap the fourth sub-coil SC2b in the second direction. In this way, the first magnet 1252a and the second magnet 1252b may be disposed to face two sub-coils in the same manner.

Furthermore, in the second camera actuator, the coils of the first and second driving units may be described as including first sub-coils SC1a and SC1b and second sub-coils SC2a and SC2b. However, in the specification, the sub-coils driving the second lens assembly may be described interchangeably with the third sub-coil and the fourth sub-coil.

The first sub-coil SC1a and the second sub-coil SC2a may be disposed spaced apart from each other in the optical axis direction. The first sub-coil SC1a and the second sub-coil SC2a may be connected in parallel with each other. For example, any one of one end and the other end of the first sub-coil SC1a and any one of one end and the other end of the second sub-coil SC2a may be connected as one node. Further, the other of one end and the other end of the first sub-coil SC1a and the other of one end and the other end of the second sub-coil SC2a may be connected as another node. That is, a current applied to the first sub-coil SC1a and the second sub-coil SC2a may be distributed to each of the sub-coils. Thus, the first sub-coil SC1a and the second sub-coil SC2a are electrically connected in parallel with each other, which can reduce heat generation.

Furthermore, the polarity of one surface of the first driving magnet 1252a facing the first driving coils SC1a and SC2a may be the same as the polarity of one surface of the second driving magnet 1252b facing the second driving coils SC1b and SC2b. For example, an inner surface of the first driving magnet 1252a and an inner surface of the second driving magnet 1252b may have one of an N polarity and an S polarity (for example, an N polarity). An outer surface of the first driving magnet 1252a and an outer surface of the second driving magnet 1252b may have the other of the N polarity and the S polarity (for example, the S polarity). Here, the inner surface may be a side surface adjacent to the optical axis with respect to the optical axis, and the outer surface may be a side surface away from the optical axis. Furthermore, the first magnet 1252a may have a first polarity on a first surface BSF1 facing the optical driving coil (for example, the first coil). Further, the first magnet 1252a may have a second polarity on a second surface BSF2 that is a surface opposite to the first surface BSF1. The second magnet 1252b may have a first polarity on a first surface BSF1 facing the optical driving coil (for example, the second coil). Further, the second magnet 1252b may have a second polarity on the second surface BSF2 that is a surface opposite to the first surface BSF1. The first polarity may be one of an N polarity and an S polarity. Further, the second polarity may be the other of the N polarity and the S polarity.

Alternatively, the first driving magnet and the second driving magnet may have a structure in which the N polarities/S polarities or the S polarities/N polarities are sequentially arranged in the optical axis direction.

Furthermore, the third sub-coil SC1b and the fourth sub-coil SC2b may be disposed spaced apart from each other in the optical axis direction. The third sub-coil SC1b and the fourth sub-coil SC2b may be connected in parallel with each other. For example, any one of one end and the other end of the third sub-coil SC1b and any one of one end and the other end of the fourth sub-coil SC2b may be connected as one node.

The first magnet 1252a and the second magnet 1252b may be disposed in the above-described grooves of the moving assembly 1222, and may be positioned to correspond to the first coil 1251a and the second coil 1251b. Further, the optical driving magnet 1252 may be coupled to the first and second lens assemblies (or moving assembly) together with a yoke to be described below.

The base unit 1260 may be located between the lens unit 1220 and the image sensor in the circuit board. A component such as a filter may be fixed to the base unit 1260. Additionally, the base unit 1260 may be disposed to surround the image sensor described above. With this configuration, the image sensor is free from foreign matter, which can improve the reliability of the device. However, this configuration is omitted in some of the drawings and will be described below.

Furthermore, the second camera actuator 1200 may be a zoom actuator or an auto-focus actuator. For example, the second camera actuator may support one or a plurality of lenses and move the lenses in response to a control signal from a predetermined control unit to perform an auto-focus function or a zoom function.

Further, the second camera actuator may be a fixed zoom or a continuous zoom. For example, the second camera actuator may move the lens group 1221.

Furthermore, the second camera actuator may be composed of a plurality of lens assemblies. For example, in the second camera actuator, one or more of the third lens assembly (not shown) and the guide pin (not shown) may be disposed, in addition to the first lens assembly 1222a and the second lens assembly 1222b. The above description can be applied to this. Thus, the second camera actuator may perform a high magnification zoom function via the driving unit.

The image sensor may be located inside or outside the second camera actuator. In an embodiment, the image sensor may be located outside the second camera actuator, as shown in the drawing. For example, the image sensor may be located on the circuit board. The image sensor may receive light and convert the received light into electrical signals. Furthermore, the image sensor may be composed of a plurality of pixels arranged in an array form. Further, the image sensor may be located on the optical axis.

The substrate unit 1270 may come into contact with a side portion of the housing. For example, the substrate unit 1270 may be located on an outer surface (first side surface) of a first side portion and an outer surface (second side surface) of a second side portion of the housing, particularly, the 1-2 housing, and may come into contact with the first side surface and the second side surface.

The second camera actuator may further include first stoppers ST1a, ST1b, and ST1c disposed in one end (or front end) and second stoppers ST2a and ST2b disposed in the other end (or rear end) in the housing (or 1-2 housing 1232).

The first stopper ST1 may be located at one end in the housing. For example, the first stopper ST1 may be located at an end in a direction opposite to the optical axis direction in the 1-2 housing or the main barrel 1232. In an embodiment, the first stopper ST1 may be located on an inner side wall or an inner wall of the housing or the main barrel 1232. The first stopper ST1 may be located on a first inner wall of the first inner wall and a second inner wall facing each other in the optical axis direction in the main barrel 1232. Furthermore, the first stopper ST1 may include a 1-1 stopper ST1a disposed on one side and a 1-2 stopper ST1b disposed on the other side. For example, the 1-1 stopper ST1a may be disposed on one side of the first inner wall. Further, the 1-2 stopper ST1b may be disposed on the other side of the first inner wall. The 1-1 stopper ST1a may be positioned adjacent to the first side portion. The 1-2 stopper ST1b may be positioned adjacent to the second side portion. One side and the other side may mean one side and a side opposite thereto in the second direction.

Alternatively, the 1-1 stopper ST1a and the guiding unit of the first lens assembly may overlap in the optical axis direction. The 1-2 stopper ST1b and a lens protrusion portion of the first lens assembly may overlap in the optical axis direction.

Additionally, the first stopper ST1 may include a 1-3 stopper ST1c disposed on the other side in the main barrel 1232. The 1-3 stopper ST1c may be positioned so that the 1-3 stopper ST1c and a guiding unit of the second lens assembly 1222b overlap in the optical axis direction. The 1-2 stopper ST1b may be located between the 1-3 stopper ST1c and the 1-1 stopper ST1a in the horizontal direction or in the second direction.

Additionally, the second stopper ST2 may be disposed at the other end in the 1-2 housing or the main barrel 1232. For example, the second stopper ST2 may be located at an end in the optical axis direction in the 1-2 housing or the main barrel 1232. In an embodiment, the second stopper ST2 may be located on an inner side wall or an inner wall of the housing or the main barrel 1232. The second stopper ST2 may be located on the second inner wall of the first inner wall and the second inner wall facing each other in the optical axis direction in the main barrel 1232. The first inner wall may be adjacent to the first camera actuator or the first lens assembly. The second inner wall may be adjacent to the image sensor.

Furthermore, the second stopper ST2 may include a 2-1 stopper ST2a disposed on one side and a 2-2 stopper ST2b disposed on the other side. The 2-1 stopper ST2a may be positioned adjacent to the first side portion. The 2-2 stopper ST2b may be positioned adjacent to the second side portion. For example, the 2-1 stopper ST2a may be disposed on one side of the first inner wall. Further, the 2-2 stopper ST2b may be disposed on the other side of the first inner wall.

Referring to FIGS. 7A, 7B, and 7C, as described above, the housing 1230 (particularly, the 1-2 housings 1232) may include the first side portion 1232a and the second side portion 1232b. The first side portion 1232a and the second side portion 1232b may be positioned to correspond to each other. For example, the first side portion 1232a and the second side portion 1232b may be symmetrically disposed with respect to the third direction. The second driving coil may be located on the first side portion 1232a and the second side portion 1232b. Further, a second substrate unit may be seated on outer surfaces of the first side portion 1232a and the second side portion 1232b. The second substrate unit may be located outside the driving coil and electrically connected to the driving coil.

For example, a first substrate may be located on an outer surface of the first side portion 1232a, and a second substrate may be located on an outer surface of the second side portion 1232b.

Furthermore, the first guide grooves GG1a and GG1b in which the first ball is seated may be located in the inner surface (or the first inner wall) of the first side portion 1232a. The first guide grooves GG1a and GG1b may face the first recess described above. Similarly, the second guide grooves GG2a and GG2b in which the second ball is seated may be located in the inner surface (second inner wall) of the second side portion 1232b. The second guide grooves may face the second recess described above.

Furthermore, the first side portion 1232a may include a first side hole 1232ah. The first magnet may be located in the first side hole 1232ah. Furthermore, the first side hole 1232ah may have a smaller length in the first direction than the first coil.

Further, the second side portion 1232b may include a second side hole 1232bh. The second magnet may be located in the second side hole 1232bh. Furthermore, the second side hole 1232bh may have a smaller length in the first direction than the second coil.

In an embodiment, the first side portion 1232a in the housing 1232 may have an inner surface facing the guiding unit of the first lens assembly. The guiding unit (first guiding unit) of the first lens assembly may be disposed on a side portion (first side portion) of the housing. The second side portion 1232b may also face the first side portion 1232a and have an inner surface. Accordingly, the inner surface of the second side portion 1232b may face the second lens assembly. The guiding unit (second guiding unit) of the second lens assembly may be disposed on a side portion (second side portion) of the housing.

Further, the first guide groove and the second guide groove in which the balls are seated may be located in the first side portion 1232a and the second side portion 1232b, respectively.

Furthermore, the 1-2 housing 1232 may include housing holes disposed in any one of the upper and lower portions thereof. In an embodiment, the housing 1232 may include an upper surface and a lower surface disposed between the first side portion 1232a and the second side portion 1232b.

Further, the housing holes may be disposed in the upper surface and the lower surface. For example, the housing holes may include a first hole 1232h1 and a second hole 1232h2. The first hole 1232h1 may be located in the upper surface of the housing 1232. The second hole 1232h2 may be located in the lower surface of the housing 1232. Accordingly, the upper surface of the housing 1232 may include the first hole 1232h1. The lower surface of the housing 1232 may include the second hole 1232h2.

Further, through the housing holes, the first and second lens assemblies described below may be easily coupled, or inspection (for example, visual inspection) of the first lens assembly and the second lens assembly may be performed.

Further, the first guide grooves GG1a and GG1b located in the first side portion 1232a may extend in the third direction. Furthermore, as described above, the first guide grooves GG1a and GG1b may have different shapes. For example, one first guide groove GG1a of the first guide grooves may be an inclined groove and the other guide groove GG1b may have a flat structure. The same can also apply to the second guide grooves GG2a and GG2b. The first and second balls are seated in the inclined groove and the groove with a flat structure so that the first lens assembly or the second lens assembly may move in the optical axis direction.

Referring to FIGS. 8 and 9, an electromagnetic force will be described below based on one coil. In the camera device according to the embodiment, an electromagnetic force DEM1 between the first magnet 1252a and the first coil 1251a may be generated so that the first lens assembly 1222a moves along a rail located on the inner surface of the housing through the first ball B1 in a horizontal direction to the optical axis, that is, in the third direction (Z-axis direction) or in a direction opposite to the third direction. At this time, the first magnet 1252a and the second magnet 1252b do not move to regions facing edges of the first and second sub-coils. Thus, an electromagnetic force is formed based on the flow of current in the regions adjacent to the first sub-coil and the second sub-coil.

As described above, in the camera device according to the embodiment, the first magnet 1252a may be provided in the first lens assembly 1222a using, for example, a single-pole magnetization method. For example, in an embodiment, a surface (first surface) facing the outer surface of the first magnet 1252a may be an S polarity. Further, the outer surface of the first magnet 1252a may be a surface facing the first coil 1251a. Further, a surface opposite to the first surface may be an N polarity. Accordingly, only one of the N polarity and the S polarity may be positioned to face the first coil 1251a. Here, the following description will be made based on the assumption that the outer surface of the first magnet 1252a is an S polarity. Furthermore, the first coil 1251a may be composed of a plurality of sub-coils, and current may flow in directions opposite to each other in the plurality of sub-coils. That is, in a region adjacent to the second sub-coil SC2a in the first sub-coil SC1a, current may flow in the same manner as in 'DE1.'

In other words, a first region of the first sub-coil SC1a and a second region of the second sub-coil SC2a may have the same current direction. The first region of the first sub-coil SC1a is a region in which the first region and the first driving magnet 1252a overlap in a direction perpendicular to the optical axis direction (second direction) and which is disposed perpendicular to the optical axis direction (for example, disposed in the first direction). The second region of the second sub-coil Sc2a is a region in which the second region and the first driving magnet 1252a overlap in the direction perpendicular to the optical axis direction (second direction) and which is disposed perpendicular to the optical axis direction (for example, disposed in the first direction).

Furthermore, as shown in the drawing, in the embodiment, when a magnetic force is applied in the second direction (Y-axis direction) from the S polarity of the first magnet 1252a and a current DE1 flows in the first direction (X-axis direction) in the first coil 1251a, the electromagnetic force DEM1 may act in the third direction (Z-axis direction) in accordance with the interaction of electromagnetic forces (for example, Fleming's left hand rule).

At this time, since the first coil 1251a is fixed to the side portion of the housing, the first lens assembly 1222a in which the first magnet 1252a is disposed may move in a direction opposite to the Z-axis direction using the electromagnetic force DEM1 in accordance with the direction of a current. That is, the optical driving magnet may move in a direction opposite to that of the electromagnetic force applied to the optical driving coil. Also, the direction of the electromagnetic force may be changed depending on the current of the coil and the magnetic force of the magnet.

Accordingly, the first lens assembly 1222a may move along the rail located on the inner surface of the housing through the first ball in the third direction or in a direction parallel to the optical axis direction (in both directions). In this case, the electromagnetic force DEM1 may be controlled in proportion to the current DE1 applied to the first coil 1251a.

The first lens assembly 1222a or the second lens assembly 1222b may include a first recess RS1 in which the first ball or the second ball is seated. Additionally, the first lens assembly 1222a or the second lens assembly 1222b may include a second recess RS2 in which the first ball or the second ball is seated. A plurality of first recesses RS1 and a plurality of second recesses RS2 may be provided. A length in the optical axis direction (Z-axis direction) of the first recess RS1 may be set in advance. Furthermore, a length in the optical axis direction (Z-axis direction) of the second recess RS2 may be set in advance. Accordingly, the first ball and the second ball may have movement distances thereof adjusted in the optical axis direction in the recesses. In other words, the first recess RS1 or the second recess RS2 may be a stopper for the first or second ball.

Further, in the camera device according to the embodiment, the second magnet 1252b may be provided in the second lens assembly 1222b using, for example, a single-pole magnetization method.

Furthermore, the first coil 1251a may be composed of a plurality of sub-coils, and current may flow in directions opposite to each other in the plurality of sub-coils. That is, in a region adjacent to the second sub-coil SC2a in the first sub-coil SC1a, current may flow in the same manner as in 'DE1.'

Additionally, in an embodiment, any one of the N polarity and the S polarity of the second magnet 1252b may be positioned to face the second coil 1251b. Further, in an embodiment, a surface (first surface) facing the outer surface of the second magnet 1252b may be an S polarity. Also, the first surface may be an N polarity. The following description will be made based on the assumption that the first surface is an N pole as shown in the drawing.

Furthermore, the second coil 1251b may be composed of a plurality of sub-coils, and current may flow in directions opposite to each other in the plurality of sub-coils. That is, in a region adjacent to the second sub-coil SC2b in the first sub-coil SC1b, current may flow in the same manner as in 'DE2.'

In an embodiment, when a magnetic force DM2 is applied in the second direction (Y-axis direction) from the first surface (N polarity) of the second magnet 1252b and a current DE2 flows in the first direction (X-axis direction) from the second coil 1251b corresponding to the N polarity, an electromagnetic force DEM2 may act in the third direction (Z-axis direction) in accordance with the interaction of electromagnetic forces (for example, Fleming's left hand rule).

At this time, since the second coil 1251b is fixed to the side portion of the housing, the second lens assembly 1222b in which the second magnet 1252b is disposed may move in a direction opposite to the Z-axis direction using the electromagnetic force DEM2 in accordance with the direction of a current. For example, as described above, the direction of the electromagnetic force may be changed depending on the current of the coil and the magnetic force of the magnet. Accordingly, the second lens assembly 1222b may move along the rail located on the inner surface of the housing through the second ball B2 in a direction parallel to the third direction (Z-axis direction). In this case, the electromagnetic force DEM2 may be controlled in proportion to the current DE2 applied to the second coil 1251b.

Referring to FIG. 10, in the camera device according to the embodiment, the driving unit may provide driving forces F3A, F3B, F4A, and F4B that move the first lens assembly 1222a and the second lens assembly 1222b of the lens unit 1220 in the third direction (Z-axis direction). The driving unit may include the optical driving coil 1251 and the optical driving magnet 1252 as described above. Further, the lens unit 1220 may move in the third direction (Z-axis direction) using the electromagnetic force formed between the optical driving coil 1251 and the optical driving magnet 1252.

At this time, the first coil 1251a and the second coil 1251b may be disposed in holes formed in the side portions (for example, the first side portion and the second side portion) of the housing 1230. Further, the second coil 1251b may be electrically connected to the first substrate 1271. The first coil 1251a may be electrically connected to the second substrate 1272. Accordingly, the first coil 1251a and the second coil 1251b may receive a driving signal (for example, current) supplied from a driving driver on the circuit board of the circuit board 1300 through the substrate unit 1270.

At this time, the first lens assembly 1222a on which the first magnet 1252a is seated may move in the third direction (Z-axis direction) using the electromagnetic forces F3A and F3B between the first coil 1251a and the first magnet 1252a. Additionally, the second lens group 1221b seated in the first lens assembly 1222a may also move in the third direction.

Further, using the electromagnetic forces F4A and F4B between the second coil 1251b and the second magnet 1252b, the second lens assembly 1222b on which the second magnet 1252b is seated may move in the third direction (Z-axis direction). Additionally, the third lens group 1221c seated in the second lens assembly 1222b may also move in the third direction.

Accordingly, as described above, the focal length or the magnification of the optical system may be changed by moving the second lens group 1221b and the third lens group 1221c. In an embodiment, the magnification may be changed by moving the second lens group 1221b. In other words, zoom may be achieved. Additionally, focus may be adjusted by moving the third lens group 1221c. In other words, auto-focus may be achieved.

Additionally, the second camera actuator may be a fixed zoom or continuous zoom type depending on the movement method of the second lens group (or third lens group).

Furthermore, the first Hall sensor 1253a and the second Hall sensor 1253b may be disposed at at least one of the first sub-coil and the second sub-coil. For example, the first Hall sensor 1253a and the second Hall sensor 1253b may overlap in the second direction. Alternatively, the first Hall sensor 1253a and the second Hall sensor 1253b may not overlap in the second direction. Alternatively, the first Hall sensor 1253a and the second Hall sensor 1253b may partially overlap in the second direction.

Depending on the driving of the first lens assembly, the first lens assembly 1222a may be located as close as possible to the first stopper ST1a and ST1b side. At this time, a distance between the guiding unit in the first lens assembly 1222a and the 1-1 stopper ST1a may be reduced. In addition, a distance between the 1-2 stopper ST1b and the lens protrusion portion of the first lens assembly may also be reduced.

That is, when the first lens assembly 1222a maximally moves toward the first camera actuator side, the first lens assembly 1222a may collide with the 1-1 stopper ST1a and the 1-2 stopper ST1b. The 1-1 stopper and the 1-2 stopper may collide simultaneously or sequentially with the first lens assembly due to the movement of the first lens assembly. In this embodiment, the 1-1 stopper and the 1-2 stopper may collide simultaneously with the first lens assembly due to the movement of the first lens assembly.

Accordingly, even when a lens made of glass is disposed in the first lens assembly 1222a (or the second lens assembly) (for example, at the frontmost end), collision with the first lens assembly 1222a (or the second lens assembly) at the maximum movement position (mecha position) thereof may be minimized. That is, the phenomenon of the lens being broken may be suppressed. For example, at least one of the first lens assembly and the second lens assembly may include a lens including glass. Further, the glass may be located at an outermost side in the first lens assembly or the second lens assembly.

In a modified example, in the event of a sequential collision, the impact may be primarily absorbed by the guiding unit, which has a large volume, thereby minimizing damage to the first lens assembly.

Similarly, the 2-2 stopper ST2b may collide with the second lens assembly 1222b. That is, when the second lens assembly 1222b maximally moves toward the image sensor or in the optical axis direction, the second lens assembly 1222b may collide with the 2-2 stopper ST2b and the 2-1 stopper ST2a. Accordingly, even when a lens made of glass is disposed in the second lens assembly 1222b, collision with the first lens assembly 1222a at the maximum movement position (mecha position) thereof may be minimized. That is, the phenomenon of the lens being broken may be suppressed. The same applies to modified examples.

In other words, the 1-1 stopper ST1a and the 1-2 stopper ST1b may come into contact with the first lens assembly 1222a when the first lens assembly 1222a moves. When the first lens assembly 1222a maximally moves in a mecha to mecha manner, the first lens assembly 1222a may come into contact with the first stoppers ST1a and ST1b. For example, the first lens assembly 1222a may move to an end portion in the optical axis direction or an end portion in a direction opposite to the optical axis direction. At this time, the first lens assembly 1222a may move to a location where the first lens assembly 1222a comes into contact with the first stopper or the second stopper. For example, when the first lens assembly 1222a moves, the camera module may be in a tele or wide state. The camera module may be in the wide state when the first lens assembly 1222a comes into contact with or is as close as possible to (with tolerance) to the first stopper, and the camera module may be in the tele state when the first lens assembly 1222a comes into contact with or is as close as possible to (with tolerance) to the second stopper.

Furthermore, when the second lens assembly 1222b moves in the optical axis direction, the 1-3 stopper ST1c may come into contact with the second lens assembly 1222b.

In this way, due to the first stopper, the impact caused by the movement of the first lens assembly 1222a and the second lens assembly 1222b may be reduced. As a result, as described above, the reliability of the first lens assembly 1222a and the second lens assembly 1222b as well as the reliability of the second lens group and the third lens group therein can be improved. Furthermore, since the range of movement of the first lens assembly 1222a and the second lens assembly 1222b may be limited, driving for accurate magnification or the like may be achieved.

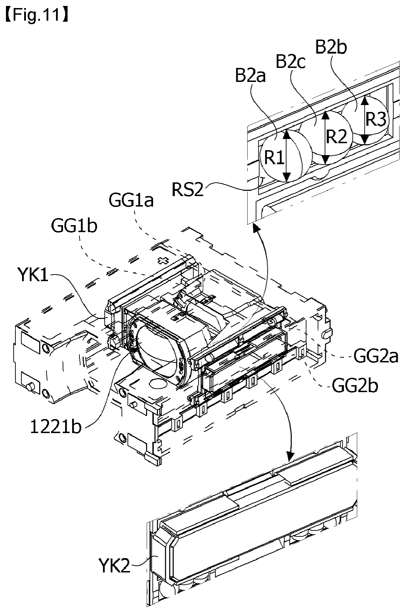

FIG. 11 is a perspective view of a part of a configuration of the second camera actuator according to the embodiment.

Referring to FIG. 11, the first lens assembly 1222a and the second lens assembly 1222b may be disposed spaced apart in the optical axis direction (Z-axis direction).

The second guide groove may be disposed opposite to the first guide groove. In an embodiment, the first guide groove and the second guide groove may overlap at least partially in the second direction (Y-axis direction). With this configuration, the space efficiency of the driving unit for moving the first and second lens assemblies in the second camera actuator can be improved so that the miniaturization of the second camera actuator is easily achieved.

The first guide groove may have the first ball, the first coil, or the like disposed adjacent thereto as described above and the second guide groove may have the second ball, the second coil, or the like disposed adjacent thereto as described above.

Furthermore, according to the embodiment, the first and second lens assemblies 1222a and 1222b may include yokes YK1 and YK2 disposed on the side surfaces thereof, respectively.

A first yoke YK1 may be located on a side surface of the first lens assembly 1222a. A second yoke YK2 may be located on a side surface of the second lens assembly 1222b. At least a part of the first yoke YK1 and the second yoke YK2 may extend outward. Accordingly, the first yoke YK1 may surround at least a part of the side surface of the first magnet 1252a. As shown in the drawing, the first yoke YK1 may be formed to have various structures in which the first yoke YK1 surrounds an inner surface and a part of a side surface of the first magnet 1252a. For example, the first yoke YK1 is formed of divided members, and each of the divided members may be located on the inner surface and the side surface of the first magnet 1252a. Accordingly, the coupling force between the single-pole magnetized optical driving magnet and the yoke can be improved. Similarly, the second yoke YK2 may surround at least a part of a side surface of the second magnet 1252b. As shown in the drawing, the second yoke YK2 may be formed to have various structures in which the second yoke YK2 surrounds an inner surface and a part of a side surface of the second magnet 1252b. For example, the second yoke YK2 may be formed of divided members, and each of the divided members may be located on the inner surface and the side surface of the second magnet 1252b.

Furthermore, the yoke may be positioned to be coupled to both the optical driving magnet and the optical driving coil.

Further, a plurality of balls may be located on the outer surface of the lens assembly. As described above, the first ball may be located on an outer surface of the first lens assembly 1222a. The second ball may be located on an outer surface of the second lens assembly 1222b.

A plurality of first balls and a plurality of second balls may be provided. For example, the plurality of first balls may be arranged side by side in the optical axis direction (Z-axis direction) in one recess of the first lens assembly 1222a. Additionally, the plurality of second balls may be arranged side by side in the optical axis direction (Z-axis direction) in one recess of the second lens assembly 1222b.

For example, the second balls B2 may include a first sub-ball B2a, a second sub-ball B2b, and a third sub-ball B2c. The first sub-ball B2a, the second sub-ball B2b, and the third sub-ball B2c may be disposed side by side in the optical axis direction. Accordingly, the first sub-ball B2a, the second sub-ball B2b, and the third sub-ball B2c may at least partially overlap each other in the optical axis direction.

Further, the first sub-ball B2a and the second sub-ball B2b may be located at edges among the plurality of balls. The third sub-ball B2c may be located between the first sub-ball B2a and the second sub-ball B2b.

The plurality of balls may have the same diameter or different diameters. For example, at least some of the first sub-ball B2a, the second sub-ball B2b, and the third sub-ball B2c may have the same diameters R1, R3, and R2. Furthermore, the first sub-ball B2a, the second sub-ball B2b, and the third sub-ball B2c may have different diameters R1, R3, and R2.

In an embodiment, the diameters R1 and R3 of the balls (first and second sub-balls) located at the edges may be smaller than the diameter R2 of the ball (third sub-ball) located inside among the plurality of balls. For example, the diameters R1 and R3 of the first sub-ball B2a and the second sub-ball B2b may be smaller than the diameter R2 of the third sub-ball B2c. With this configuration, the movement of the lens assembly due to the plurality of balls may be performed accurately without tilting to one side.

The description of the plurality of balls can be equally applied to the first ball.

Furthermore, the plurality of optical driving magnets may be composed of the first magnet and the second magnet, as described above. Further, the first magnet and the second magnet may be opposite to each other and have the same polarities disposed on the outside thereof. That is, the first surface (outer surface) of the first magnet and the first surface (outer surface) of the second magnet may be a first polarity. Further, the second surface (inner surface) of the first magnet and the second surface (inner surface) of the second magnet may be a second polarity.

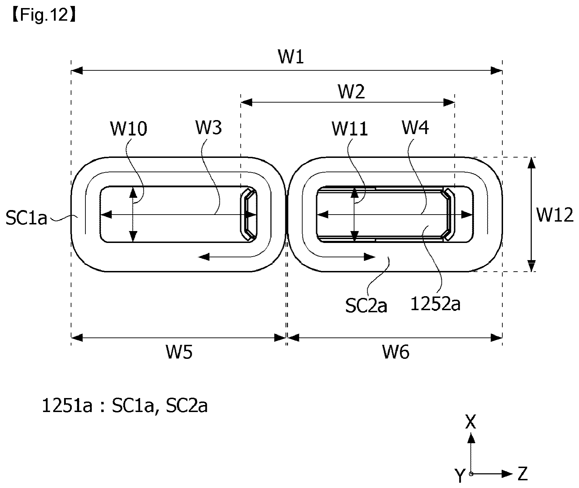

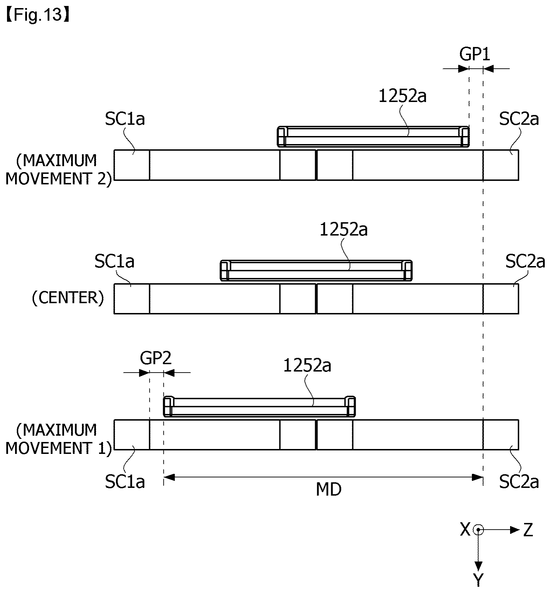

FIG. 12 is a view showing an optical driving coil, an optical driving magnet, and a yoke according to the embodiment, FIG. 13 is a view for describing movement of the optical driving magnet using a driving unit according to the embodiment, and FIG. 13 is a view for describing movement of the second and third lens assemblies according to the embodiment.

Referring to FIGS. 12 and 13, a length W5 in the optical axis direction (Z-axis direction) of the first sub-coil SC1a may be the same as a length W6 in the optical axis direction (Z-axis direction) of the second sub-coil SC2a. With this configuration, driving force control by the first sub-coil SC1a and the second sub-coil SC2a may be easily performed.

Furthermore, an overall length W1 (or maximum length) in the optical axis direction (Z-axis direction) of the optical driving coil may be greater than a length W2 (or maximum length) in the optical axis direction (Z-axis direction) of the optical driving magnet 1252a. With this configuration, a stroke by the optical driving magnet may be maximally performed. Furthermore, a long stroke using the single-pole magnetized optical driving magnet may be performed.

Furthermore, in an embodiment, a maximum movement distance MD of the first lens assembly in the optical axis direction may be greater than a length in a short axis direction (first direction) of a hole (or hollow portion) of the first sub-coil SC1a and equal to or smaller than a length W3 in a long axis direction (optical axis direction or third direction) of the hole (or hollow portion) of the first sub-coil SC1a.

Furthermore, the maximum movement distance MD of the first lens assembly may be greater than the length in the short axis direction (first direction) of a hole (or hollow portion) of the second sub-coil SC2a and equal to or smaller than a length W4 in the long axis direction (optical axis direction or third direction) of the hole (or hollow portion) of the second sub-coil SC2a.

Furthermore, in an embodiment, a maximum movement distance of the second lens assembly in the optical axis direction may be greater than a length in the short axis direction (first direction) of a hole (or hollow portion) of the third sub-coil SC1b and equal to or smaller than a length in the long axis direction (optical axis direction or third direction) of the hole (or hollow portion) of the third sub-coil SC1b.

Furthermore, the maximum movement distance of the first lens assembly may be greater than a length in the short axis direction (first direction) of a hole (or hollow portion) of the fourth sub-coil SC2b and equal to or smaller than a length in the long axis direction (optical axis direction or third direction) of the hole (or hollow portion) of the fourth sub-coil SC2b.

Furthermore, the length W3 in the optical axis direction of an inner hole of the first sub-coil SC1a and the length W4 in the optical axis direction of an inner hole of the second sub-coil SC2a may be the same.

Furthermore, the length W2 in the optical axis direction (Z-axis direction) of the driving magnet 1252a may be greater than the length W3 in the optical axis direction of the inner hole of the first sub-coil SC1a. Further, the length W2 in the optical axis direction (Z-axis direction) of the driving magnet 1252a may be greater than the length W4 in the optical axis direction of the inner hole of the second sub-coil SC2a. In this way, the optical driving magnet may move along the optical axis within the entire length in the optical axis direction of the optical driving coil.

Furthermore, the length W2 in the optical axis direction (Z-axis direction) of the optical driving magnet (or the first and second driving magnets) may be greater than the length W3 or W4 in the optical axis direction of any one of the hollow portions (or holes) of each of the sub-coils (the first sub-coil to the fourth sub-coil).

The length W2 (maximum length) in the optical axis direction (Z-axis direction) of the optical driving magnet may be smaller than the length W5 in the optical axis direction (Z-axis direction) of the first sub-coil SC1a.

With this configuration, a counter electromotive force is not generated due to the movement in the optical axis direction of the lens assembly, and a long stroke may be realized.

The length (maximum length) W2 in the optical axis direction (Z-axis direction) of the optical driving magnet (or first and second driving magnets) may be 0.6 times or less the maximum length W1 in the optical axis direction of the corresponding first driving coil. Preferably, the length (maximum length) W2 in the optical axis direction (Z-axis direction) of the optical driving magnet (or first and second driving magnets) may be 0.55 times or less the maximum length W1 in the optical axis direction of the corresponding first driving coil. More preferably, the length (maximum length) W2 in the optical axis direction (Z-axis direction) of the optical driving magnet (or first and second driving magnets) may be 0.5 times or less the maximum length W1 in the optical axis direction of the corresponding first driving coil. Thus, the camera device may provide a long stroke with a minimal counter electromotive force.

The maximum movement distance MD of the first lens assembly in the optical axis direction may be smaller than the length (maximum length) W2 in the optical axis direction (Z-axis direction) of the optical driving magnet (or first and second driving magnets). For example, the maximum movement distance MD of the first lens assembly in the optical axis direction may be 0.66 times or more and 0.92 times or less the length (maximum length) W2 in the optical axis direction (Z-axis direction) of the optical driving magnet (or first and second driving magnets). In this way, the generation of a counter electromotive force may be suppressed as much as possible.

Furthermore, in an embodiment, the overall length W1 (or maximum length) in the optical axis direction (Z-axis direction) of the optical driving coil may be 18 mm to 20 mm. Furthermore, the length W2 in the optical axis direction (Z-axis direction) of the optical driving magnet may be 8 mm to 12 mm. Further, the length W3 in the long axis direction (optical axis direction or third direction) of the hole (or hollow portion) of the first sub-coil SC1a may be 5.6 mm to 8.7 mm. Further, the length W4 in the long axis direction (optical axis direction or third direction) of the hole (or hollow portion) of the second sub-coil SC2a may be 5.6 mm to 8.7 mm.

The length W5 in the optical axis direction (Z-axis direction) of the first sub-coil SC1a may be 8 mm to 10 mm. However, as described above, the length W5 in the optical axis direction (Z-axis direction) of the first sub-coil SC1a may be greater than or equal to the length (W2) in the optical axis direction (Z-axis direction) of the optical driving magnet.

Furthermore, the length W6 in the optical axis direction (Z-axis direction) of the second sub-coil SC2a may be 8 mm to 10 mm. However, as described above, the length W5 in the optical axis direction (Z-axis direction) of the second sub-coil SC2a may be greater than or equal to the length (W2) in the optical axis direction (Z-axis direction) of the optical driving magnet.

Furthermore, in an embodiment, current may flow in the first sub-coil SC1a and the second sub-coil SC2a in different directions in accordance with the single-pole magnetization of the optical driving magnet. For example, current may flow in the first sub-coil SC1a in any one of the clockwise and counterclockwise directions, and current may flow in the second sub-coil SC2a in the other of the clockwise and counterclockwise directions.

Furthermore, the length W2 in the optical axis direction (Z-axis direction) of the optical driving magnet may be greater than the movement distance in the optical axis direction of the lens assembly. That is, the length W2 in the optical axis direction (Z-axis direction) of the optical driving magnet may be greater than the maximum movement distance of the first lens assembly or the maximum movement distance of the second lens assembly. With this configuration, a driving force for movement in the optical axis direction may be safely provided.

Furthermore, as described above, the plurality of lens assemblies may be provided, and the rearmost lens assembly among the plurality of lens assemblies may have a greater distance of movement in the optical axis direction than the frontmost lens assembly among the plurality of lens assemblies.

For example, the movement distance in the optical axis direction of the first lens assembly 1222a may be smaller than the movement distance in the optical axis direction of the second lens assembly 1222b. In other words, the movement distance in the optical axis direction of the second lens assembly 1222b may be greater than the movement distance in the optical axis direction of the first lens assembly. The first lens assembly 1222a may be located at a front end of the second lens assembly 1222b.

Furthermore, in the camera actuator according to the embodiment, the optical driving magnet 1252a may move from a 'center' to 'maximum movement 1' or 'maximum movement 2.' Here, in the case of the 'center,' the optical driving magnet 1252a may overlap the first sub-coil SC1a and and the second sub-coil SC2a in the second direction. In other words, the first sub-coil SC1a and the second sub-coil SC2a may both face the optical driving magnet.

Further, since the sub-coils are coils extending in the first direction in which the driving force due to an actual electromagnetic force is provided, a region where the first sub-coil SC1a and the optical driving magnet 1252a overlap may be the same as a region where the second sub-coil SC2a and the optical driving magnet 1252a overlap. Thus, the generation of a counter electromotive force is minimized, enabling a long stroke to be implemented.

Further, the case of 'maximum movement 1' may correspond to a case in which the optical driving magnet 1252a maximally moves in a direction opposite to the third direction (Z-axis direction). At this time, in the optical driving magnet 1252a, a region in which the optical driving magnet 1252a and the first sub-coil SC1a overlap may be greater than a region in which the optical driving magnet 1252a and the second sub-coil SC2a overlap. Furthermore, the optical driving magnet 1252a and the inner hole of the first sub-coil SC1a may at least partially overlap. More specifically, the optical driving magnets 1252a may be spaced apart in the optical axis direction from the edge of the inner hole of the first sub-coil SC1a by a predetermined separation distance GP2. With this configuration, the counter electromotive force generated at an end portion of the first sub-coil SC1a may be reduced. For example, the optical driving magnet 1252a may move with a maximum stroke to a region where the optical driving magnet 1252a and an end portion in a direction opposite to the optical axis direction of the first sub-coil SC1a do not overlap in the second direction (Y-axis direction).

Further, the case of 'maximum movement 2' may correspond to a case in which the optical driving magnet 1252a maximally moves in the third direction (Z-axis direction). At this time, in the optical driving magnet 1252a, a region in which the optical driving magnet 1252a and the second sub-coil SC2a overlap may be greater than a region in which the optical driving magnet 1252a and the first sub-coil SC1a overlap. Furthermore, the optical driving magnet 1252a and the inner hole of the second sub-coil SC2a may at least partially overlap. More specifically, the optical driving magnet 1252a may be spaced apart in the optical axis direction from the edge of the inner hole of the second sub-coil SC2a by a predetermined separation distance GP1. With this configuration, the counter electromotive force generated at an end portion of the second sub-coil SC2a may be reduced. For example, the optical driving magnet 1252a may move with a maximum stroke to a region where the optical driving magnet 1252a and an end portion in a direction opposite to the optical axis direction of the second sub-coil SC2a do not overlap in the second direction (Y-axis direction).

Accordingly, even when a small length in the optical axis direction of the optical driving magnet 1252a is provided, the long stroke of the camera actuator may be efficiently implemented through the single-pole magnetization and the direction of the current in the plurality of optical driving coils.

Furthermore, the maximum movement distance of the optical driving magnet 1252a may correspond to the lengths in the optical axis direction of the first and second recesses for accommodating the first ball or the second ball in the first lens assembly described above. Furthermore, the maximum movement distance of the optical driving magnet 1252a may correspond to a distance in which the optical driving magnet 1252a moves from maximum movement 1 to maximum movement 2 in the optical axis direction (Z-axis direction). Alternatively, the maximum movement distance of the optical driving magnet 1252a may correspond to an interval between the stoppers that limit the movement in the optical axis direction of the first ball or the second ball. Alternatively, the maximum movement distance of the optical driving magnet 1252a may correspond to the maximum distance that the bobbin may move and may correspond to the separation distance in the optical axis direction between the stopper located in the optical axis direction with respect to the bobbin and the stopper located in a direction opposite to the optical axis direction.

Furthermore, the maximum movement distance of the optical driving magnet 1252a may correspond to twice the distance in which the optical driving magnet 1252a moves from the center to maximum movement 1. Further, the movement distance of the optical driving magnet 1252a according to the embodiment may be from -6 mm to +6 mm with respect to the center. Here, '+' is attached to a movement distance in the optical axis direction from the center, and '-' is attached to a movement distance in a direction opposite to the optical axis direction. Accordingly, the optical driving magnet 1252a (or at least one of the first lens assembly and the second lens assembly) according to the embodiment may move in the range of 0 mm to 12 mm in the optical axis direction. Furthermore, the maximum movement distance described above may correspond to the maximum stroke of the lens assembly in the camera module.

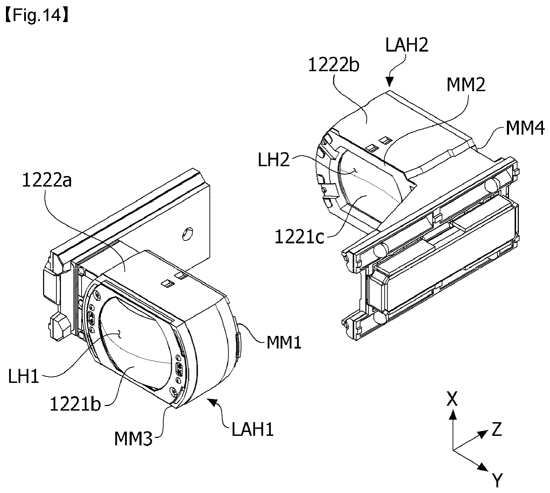

FIG. 14 is a perspective view of a first lens assembly, a first coupling member, a second coupling member, and a second lens assembly according to the embodiment.

Referring to FIG. 14, the first lens assembly 1222a and the second lens assembly 1222b may be disposed spaced apart in the optical axis direction (Z-axis direction). Further, the first lens assembly 1222a and the second lens assembly 1222b may move in the optical axis direction (Z-axis direction) using the driving unit. For example, an auto-focus or zoom function may be performed through the movement of the first lens assembly 1222a and the second lens assembly 1222b.

Furthermore, the first lens assembly 1222a may include a first lens holder LAH1 that holds and couples the second lens group 1221b. The first lens holder LAH1 may be coupled to the second lens group 1221b. Furthermore, the first lens holder LAH1 may include a first lens hole LH1 for accommodating the second lens group 1221b. That is, the second lens group 1221b including one or more lenses may be disposed in the first lens hole LH1. The first lens holder LAH1 is the same as accommodating portions (for example, a first accommodating portion and a second accommodating portion) described below and may be used interchangeably with the accommodating portions.

Further, the second lens assembly 1222b may include a second lens holder LAH2 that holds and couples the third lens group 1221c. Furthermore, the second lens holder LAH2 may include a second lens hole LH2 for accommodating the third lens group 1221c. That is, one or more lenses may be disposed in the second lens hole LH2.

In an embodiment, the first lens assembly 1222a and the second lens assembly 1222b may include outer surfaces adjacent to each other. The first lens assembly 1222a may include a first outer surface MM1, and the second lens assembly 1222b may include a second outer surface MM2. The first outer surface MM1 may be a bottom surface of the first lens holder LAH1 with respect to the optical axis direction (Z-axis direction). Further, a third outer surface MM3 described below may be an upper surface of the first lens holder LAH1. Further, the second outer surface MM2 may be an upper surface of the second lens holder LAH2, and a fourth outer surface MM4 may be a bottom surface of the second lens holder LAH2.

Further, the first outer surface MM1 and the second outer surface MM2 may overlap at least partially in the optical axis direction (Z-axis direction). In an embodiment, the first outer surface MM1 to the fourth outer surface MM4 may at least partially overlap each other in the optical axis direction (Z-axis direction).

For example, the coupling member (not shown) may come into contact with at least one of the first outer surface MM1 and the second outer surface MM2.

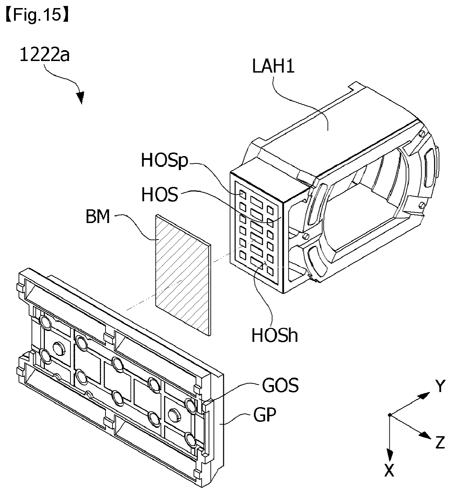

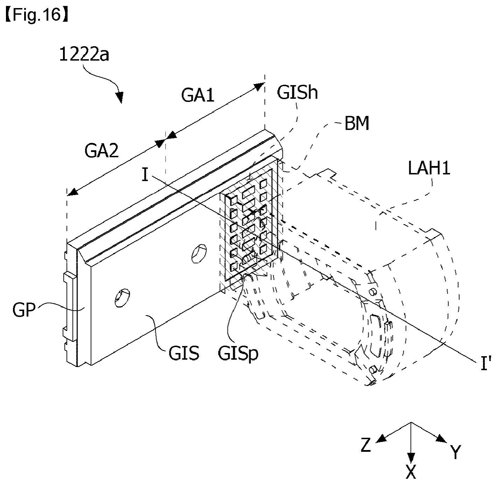

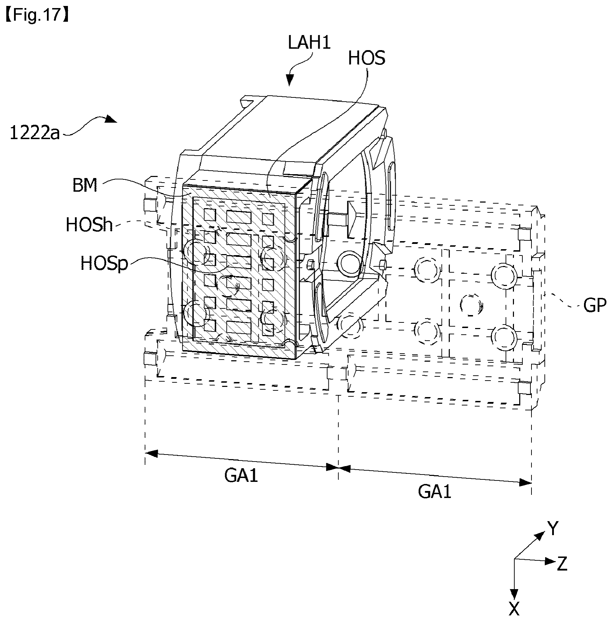

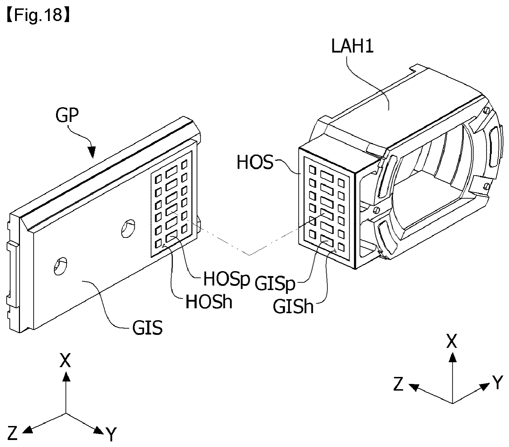

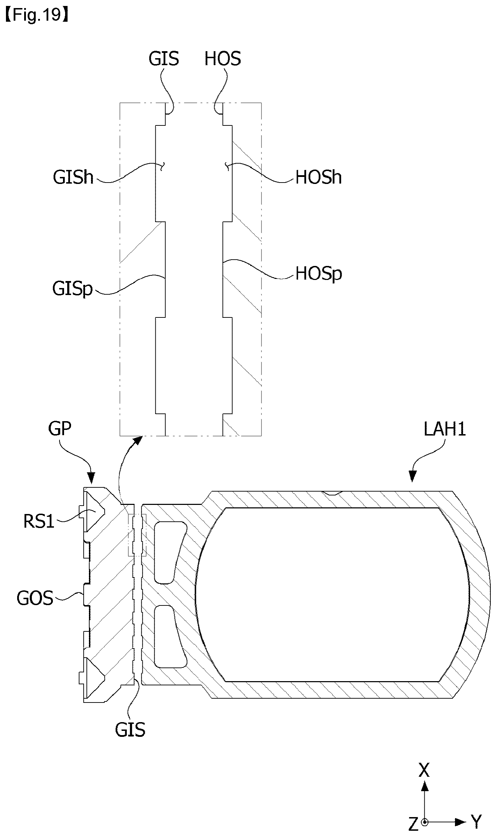

FIG. 15 is an exploded perspective view of a first lens assembly according to the embodiment, FIG. 16 is a perspective view of the first lens assembly according to the embodiment, FIG. 17 is another perspective view of the first lens assembly according to the embodiment, FIG. 18 is a view for describing a structure of a first lens holder and a guiding part in the first lens assembly according to the embodiment, and FIG. 19 is a cross-sectional view along line II' in FIG. 16.

Referring to FIGS. 15 to 19, in the second camera actuator according to the embodiment, the first bobbin 1222a may be formed by coupling a plurality of components. In an embodiment, the first bobbin 1222a may include the first lens holder LAH1, a guiding unit GP, and a bonding member BM.

The first lens holder LAH1 may include a first lens hole for accommodating a lens. Accordingly, as described above, the second lens group may be located in the first lens hole of the first lens holder LAH1. In this way, the first lens holder LAH1 may be coupled to the second lens group.

The guiding unit GP may be disposed spaced apart from the first lens holder LAH1 on one side of the first lens holder LAH1. The guiding unit GP may be spaced apart in the horizontal direction from the first lens holder LAH1. For example, the guiding unit GP may be positioned so that at least a part thereof has a space or region that is horizontally spaced apart from the first lens holder LAH1. In the first bobbin 1222a, the guiding unit GP may be a 'first guiding unit.' Furthermore, the description and structure of the second bobbin 1222b may be the same as those of the first bobbin 1222a. Alternatively, the description and structure relating to the second bobbin 1222b may be different from those of the first bobbin 1222a. For example, the second bobbin 1222b may include a second lens holder LAH2 and a guiding unit GP, like the first bobbin 1222a. The guiding unit GP may be referred to as a 'second guiding unit' in the second bobbin 1222b. Furthermore, in the second bobbin 1222b, the second lens holder LAH2 and the second guiding unit GP may be integrally formed. That is, the second guiding unit may extend in a first direction from the second lens holder and may be directly connected to the second lens holder. Furthermore, the second guiding unit may come into direct contact with the second lens holder. Furthermore, in at least one of the first bobbin and the second bobbin, the guiding unit may be bonded to the lens holder using the bonding member.

The bonding member BM may be located between the first lens holder LAH1 and the guiding unit GP. The bonding member BM may include a resin or the like. For example, the bonding member BM may include an epoxy. Furthermore, the bonding member BM may be cured when irradiated with light (for example, ultraviolet light). In this way, the first lens holder LAH1 and the guiding member GP may be bonded to each other using the bonding member BM.

By means of the bonding member BM, tilting with respect to the optical axis direction of the first lens holder LAH1 may be performed during assembly. In other words, optical axis alignment for the first lens assembly may be achieved. Thus, the optical performance of the second camera actuator according to the embodiment can be improved. Further, in the optical axis alignment, the movement, the position alignment, or the tilting of the guiding unit GP with respect to the first lens holder LAH1 may be performed in various directions. For example, with respect to the first lens holder LAH1, the guiding unit may move, may be position-aligned, or may be tilted in at least one of the first direction, the second direction, and the third direction. In other words, an optical axis alignment (active alignment) in all directions may be performed. As described above, the first bobbin or the first lens assembly 1222a may have a combined structure of the first lens holder LAH1, the guiding member GP, and the bonding member BM, which are separated. The above-described combined structure may also be applied to the second lens assembly. In addition, in other words, the central axis of each of the lens holders (first and second lens holders) may be adjusted with respect to the guiding portions (first and second guiding portions). That is, the optical axis of the lens holder may be adjusted or regulated with respect to the guiding unit.

However, the first lens assembly may have a greater distance of movement in the optical axis direction than the second lens assembly. Accordingly, more effective optical performance improvement can be provided through optical axis alignment for the first lens assembly.

Specifically, the first lens holder LAH1 may include a holder outer surface HOS that comes into contact with the bonding member BM. The outer surface HOS of the first lens holder LAH1 may be positioned to face an inner surface GIS of the guiding unit GP.

The holder outer surface HOS may include a first groove HOSh and a first protrusion HOSp. The holder outer surface HOS may be a surface facing the guiding unit GP and include the first groove HOSh disposed on the inner side. The holder outer surface (HOS) may correspond to or be referred to as a 'first surface.' Further, the inner surface GIS of the guiding unit GP may correspond to or be referred to as a 'second surface.'

The holder outer surface HOS and the inner surface GIS of the guiding unit GP may be disposed to be inclined perpendicular to an upper surface or lower surface of the first lens holder LAH1. For example, the upper surface or the lower surface of the first lens holder LAH1 may be located between opposing holder outer surfaces HOS. Furthermore, the upper surface or the lower surface of the first lens holder LAH1 is a surface that comes into contact with a gripper or the like, and the first lens holder LAH1 may be inserted into the main barrel through one of the housing holes (first hole or second hole) of the main barrel using the gripper.

Furthermore, the first lens holder LAH1 and the guiding unit GP may have facing surfaces that are inclined. For example, the holder outer surface HOS of the first lens holder LAH1 and the inner surface GIS of the guiding unit GP may be positioned inclined toward each other. The first protrusion HOSp may be located inside the first groove HOSh. For example, the first protrusion HOSp may be formed in the first groove HOSh.

The bonding member BM may be located in the first groove HOSh and the first protrusion HOSp. That is, the bonding member BM may come into contact with the holder outer surface HOS. Additionally, the bonding member BM may be located in the first groove HOSh and come into contact with the first protrusion HOSp.

In an embodiment, the bonding member BM may be disposed between the first protrusion and a second protrusion. Further, the bonding member BM may be disposed between the first groove and the second groove.

With this configuration, the bonding area between the bonding member BM and the first holder outer surface HOS may be increased. In other words, the bonding force between the first lens holder LAH1 and the guiding unit GP can be improved by the bonding member BM.

Furthermore, the guiding unit GP may include the inner surface GIS that comes into contact with the bonding member and an outer surface GOS opposite to the inner surface GIS.

The inner surface GIS of the guiding unit GP may be located closer to the optical axis than the outer surface GOS. Alternatively, the inner surface GIS of the guiding unit GP may be located closer to the second lens group than the outer surface GOS. Alternatively, the inner surface GIS of the guiding unit GP may be located further inward with respect to the optical axis than the outer surface GOS.

The guiding unit GP may include a second groove GISh and a second protrusion GISp. The second groove GISh may be located in the inner surface GIS of the guiding unit GP. The second protrusion GISp may be located on the inner surface GIS of the guiding unit GP.

The second protrusion GISp may be located inside the second groove GISh on the inner surface GIS of the guiding unit GP. For example, the second protrusion GISp may be formed in the second groove GISh.

Furthermore, the bonding member BM may be located in the second groove GISh and the second protrusion GISp. In other words, the bonding member BM may come into contact with the inner surface GIS of the guiding unit GP. Furthermore, the bonding member BM may be located in the second groove GISh. Further, the bonding member BM may come into contact with the second protrusion GISp.

With this configuration, the bonding area between the bonding member BM and the inner surface GIS of the guiding unit GP may be increased. In this way, the bonding force between the first lens holder LAH1 and the guiding unit GP can be improved by the bonding member BM.

Furthermore, the guiding unit GP may be divided into a first guiding region GA1 and a second guiding region GA2. Alternatively, the guiding unit GP may include the first guiding region GA1 and the second guiding region GA2. The first guiding region GA1 and the second guiding region GA2 may correspond to respective regions whose lengths are bisected in the optical axis direction of the guiding unit GP. The first guiding region GA1 may be closer to the first camera actuator than the second guiding region GA2. Further, the second guiding region GA2 may be closer to the image sensor than the first guiding region GA1.

In an embodiment, the second groove GISh and the second protrusion GISp may be located in at least one of the first guiding region GA1 and the second guiding region GA2. For example, the second groove GISh and the second protrusion GISp may be located in the first guiding region GA1. With this configuration, the movement distance in the optical axis direction of the first lens assembly may be increased. In other words, the movement distance of the first lens assembly for zoom may be increased. Thus, it is possible to improve optical performance (for example, magnification).

Furthermore, the outer surface GOS of the guiding unit GP may face one side portion of the housing. For example, the outer surface GOS of the guiding unit GP may face the first side portion of the housing. Alternatively, the outer surface GOS of the guiding unit GP may be located closer to the first side portion of the housing than the second side portion thereof.

Furthermore, recesses in which balls are seated may be formed in the outer surface GOS or the third surface GOS of the guiding unit GP. For example, first and second recesses in which balls are seated may be formed in the outer surface GOS or the third surface GOS of the guiding unit GP. The third surface may face a side portion of the housing.

Further, the first groove HOSh and the second groove GISh may overlap in the direction perpendicular to the optical axis direction. Alternatively, the first groove HOSh and the second groove GISh may overlap in a direction from the first surface toward the second surface. The same can also apply to the opposite direction. For example, the first groove HOSh and the second groove GISh may overlap in the horizontal direction or in the second direction. With this configuration, the bonding force of the bonding member BM for the first lens holder LAH1 and the guiding unit GP may be formed to be the same in the region where the bonding member BM, the first lens holder LAH1, and the guiding unit GP overlap in the horizontal direction. That is, the first lens holder LAH1 and the guiding member GP may be bonded to each other by the bonding member BM, and the bonding force between the first lens holder LAH1 and the guiding unit GP may also be formed in a balanced manner. In this way, the reliability of the first lens assembly can be improved.

In an additional example, the first groove HOSh may further have an additional groove formed therein. That is, the first groove HOSh may further include an additional groove. With this configuration, the bonding force between the first lens holder and the guiding unit can be further improved.

In a modified example, the first groove HOSh and the second groove GISh may only partially overlap in the direction perpendicular to the optical axis direction. For example, the first groove HOSh and the second groove GISh may not overlap at least partially in the direction perpendicular to the optical axis direction. With this configuration, the bonding area for the bonding member BM can be improved so that the bonding force between the first lens holder LAH1 and the guiding unit GP is further improved. Accordingly, the reliability of the first lens assembly can be further improved.

Further, the first protrusion HOSp and the second protrusion GISp may overlap in the direction perpendicular to the optical axis direction. The first protrusion HOSp and the second protrusion GISp may overlap in a direction from the first surface toward the second surface. The same can also apply to the opposite direction. For example, the first protrusion HOSp and the second protrusion GISp may overlap in the horizontal direction or in the second direction. With this configuration, the bonding force of the bonding member BM for the first lens holder LAH1 and the guiding unit GP may be formed to be the same in the region where the bonding member BM, the first lens holder LAH1, and the guiding unit GP overlap in the horizontal direction. That is, the first lens holder LAH1 and the guiding unit GP may be bonded to each other by the bonding member BM, and the bonding force between the first lens holder LAH1 and the guiding unit GP may also be formed in a balanced manner. In this way, the reliability of the first lens assembly can be improved.

In a modified example, the first protrusion HOSp and the second protrusion GISp may only partially overlap in the direction perpendicular to the optical axis direction. For example, the first protrusion HOSp and the second protrusion GISp may not overlap at least partially in the direction perpendicular to the optical axis direction.

Alternatively, the first protrusion HOSp and the second protrusion GISp may be alternately disposed. For example, the first protrusion HOSp and the second protrusion GISp may be alternately located in the optical axis direction. For example, the first protrusion HOSp and the second protrusion GISp may partially overlap in the optical axis direction.

With this configuration, the bonding area for the bonding member BM can be improved so that the bonding force between the first lens holder LAH1 and the guiding unit GP can be further improved. Accordingly, the reliability of the first lens assembly can be further improved.

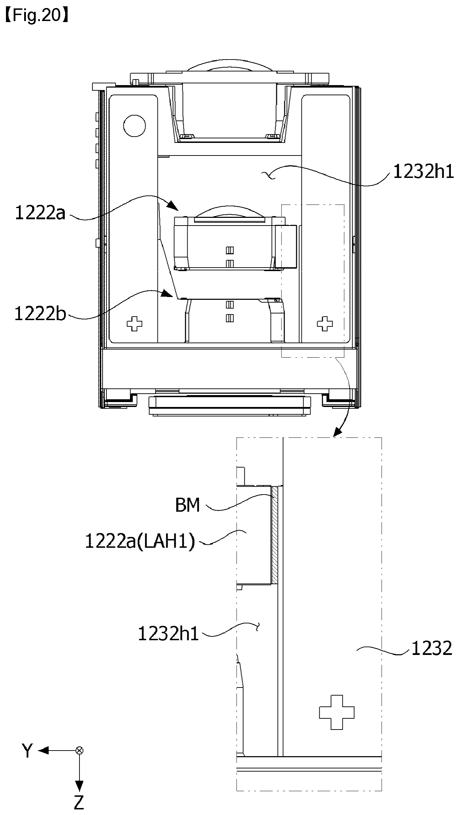

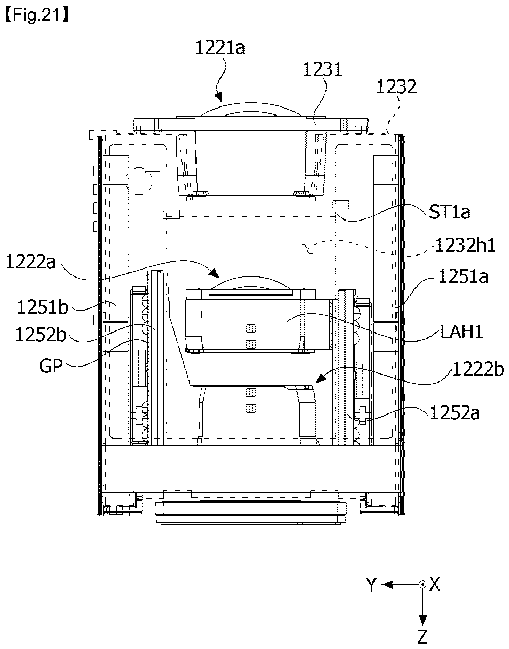

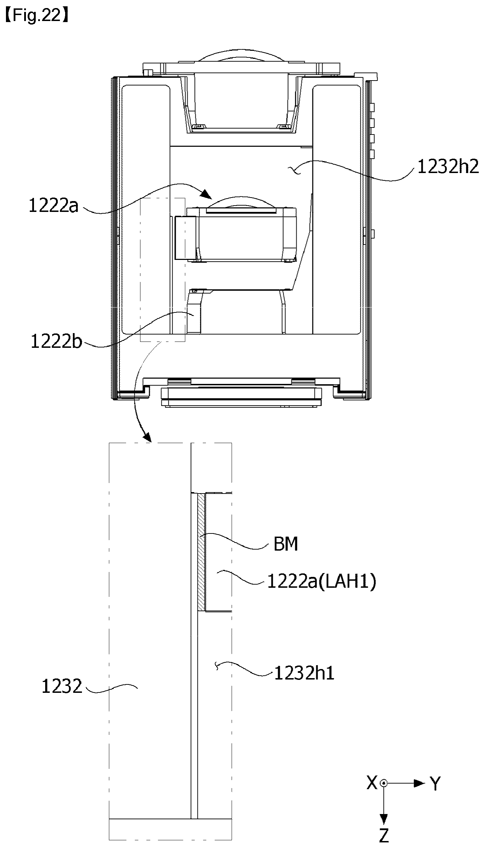

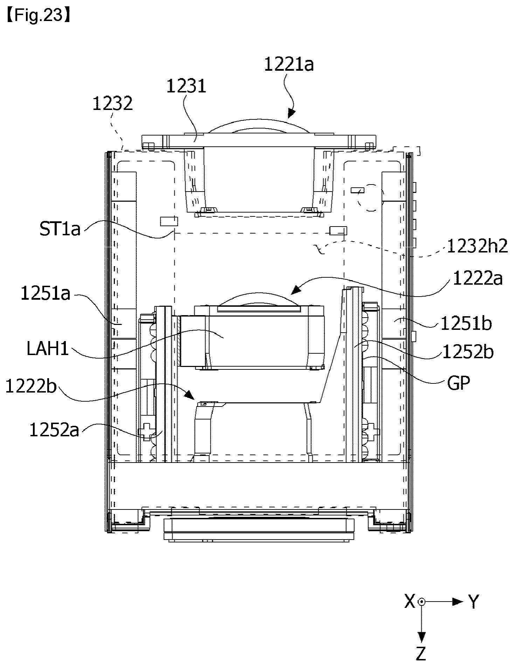

FIG. 20 is a top view of the second camera actuator according to the embodiment, FIG. 21 is a view showing the inside of the housing in the second camera actuator according to the embodiment, FIG. 22 is a bottom view of the second camera actuator according to the embodiment, and FIG. 23 is a view showing the inside of the housing in the second camera actuator according to the embodiment.

Referring to FIGS. 20 to 23, in the second camera actuator according to the embodiment, the housing 1232 may include a first hole 1232h1 and a second hole 1232h2.

Further, at least one of the first hole 1232h1 and the second hole 1232h2 may overlap the first lens holder LAH1 and the bonding member BM in the direction perpendicular to the optical axis direction. In other words, at least one of the first hole 1232h1 and the second hole 1232h2 may overlap the first lens holder LAH1 and the bonding member BM in the first direction (X-axis direction) or the vertical direction.

For example, the first lens holder LAH1 may be exposed through at least one of the first hole 1232h1 and the second hole 1232h2. Furthermore, the bonding member BM may be exposed through at least one of the first hole 1232h1 and the second hole 1232h2. Alternatively, the lens holder and the bonding member may overlap or be superimposed in the first direction with respect to the first hole and the second hole.

In an embodiment, the first hole 1232h1 and the second hole 1232h2 may overlap the first lens holder LAH1 and the bonding member BM in the first direction (X-axis direction) or the vertical direction. In other words, the first lens holder LAH1 and the bonding member BM may be exposed through the first hole 1232h1 and the second hole 1232h2. At this time, at least a part of the bonding member BM may be exposed through the first hole 1232h1 and the second hole 1232h2.

With this configuration, the first bobbin 1222a or the second bobbin 1222b may be easily introduced into the housing 1232 through at least one of the first hole 1232h1 and the second hole 1232h2. That is, assembly or connection between the housing 1232 and the first bobbin 1222a (or second bobbin 1222b) may be easily achieved.

Furthermore, when active alignment is performed on the first bobbin 1222a, the bonding member BM may also be easily irradiated with light. That is, the bonding member BM may be more easily irradiated with light through the first hole 1232h1 and the second hole 1232h2.

Accordingly, lengths in the horizontal direction or the second direction (Y-axis direction) of the first hole 1232h1 and the second hole 1232h2 may be greater than a length in the second direction (Y-axis direction) of the first lens holder LAH1 (or the first lens holder and the first bonding member).

Additionally, lengths in the optical axis direction or the third direction (Z-axis direction) of the first hole 1232h1 and the second hole 1232h2 may be greater than a length in the optical axis direction or the third direction (Z-axis direction) of the first lens holder LAH1 (or the first lens holder and the first bonding member).

Accordingly, after the optical axis alignment or active alignment for the fixed assembly is performed, the optical axis alignment or active alignment for the first bobbin 1222a may also be performed. As a result, the optical performance of the second camera actuator can be further improved, as described below. For example, the optical axes of the third lens group in the second bobbin 1222b and the second lens group in the first bobbin 1222a may have coincide with each other.

Additionally, in another example, at least one of the first bobbin 1222a and the second bobbin 1222b may have a coupling member. Accordingly, optical axis alignment may be achieved for the first bobbin 1222a (or the second lens group) and the second bobbin 1222b (or the third lens group).

In a modified example, any one of the first bobbin 1222a and the second bobbin 1222b may have a coupling member. Accordingly, optical axis alignment may be achieved for one of the first bobbin 1222a (or the second lens group) and the second bobbin 1222b (or the third lens group). For example, optical axis alignment may be performed only on the first bobbin 1222a (or the second lens group). Alternatively, optical axis alignment may be performed only on the second bobbin 1222b (or the third lens group).

Furthermore, in the active alignment (AA) for the fixed assembly, the thickness of the bonding material (for example, epoxy) used in the bonding between the fixed assembly and the housing may also be different.

As described above, the first bobbin may be composed of the first lens holder and the guiding unit (first guiding unit). The second bobbin may be composed of the second lens holder and the guiding unit (second guiding unit).

Furthermore, the holder outer surface (first surface) of the first lens holder may face the inner surface (second surface) of the first guiding unit. The first and second surfaces may be brought into contact with each other by the bonding member.

In an embodiment, the second surface may be positioned at an angle with respect to the optical axis or the optical axis direction. On the other hand, the first surface may be parallel to the optical axis or the optical axis direction. With this configuration, optical performance can be further improved.

Furthermore, the bonding member may be composed of one or more bonding members between the first and second surfaces. In an embodiment, the bonding member may be composed of a first bonding member and a second bonding member spaced apart in the optical axis direction between the first and second surfaces. Furthermore, the bonding member may have a third bonding member and a fourth bonding member disposed spaced apart in the direction perpendicular to the optical axis direction between the first and second surfaces. Further, the third bonding member and the fourth bonding member may have different thicknesses.

At this time, the first bonding member and the second bonding member may have different thicknesses due to the positional adjustment between the first surface and the second surface according to the optical axis alignment described above. Additionally, the bonding member may be formed as one piece, but may have different thicknesses for each region. For example, the thicknesses for regions of the bonding member may be different. In an embodiment, the guiding unit GP may have a portion (hereinafter, interchangeably referred to as a 'first portion') in which the guiding unit GP and at least one of the first hole 1232h1 and the second hole 1232h2 partially overlap in the direction perpendicular to the optical axis direction. For example, the guiding unit GP may have a portion (first portion) in which the guiding unit GP and at least one of the first hole 1232h1 and the second hole 1232h2 partially overlap in the vertical direction or in the first direction (X-axis direction). With this configuration, light irradiation of the bonding member BM may be performed on the entire bonding member BM. Thus, the reliability between the guiding unit GP and the first lens holder LAH1 can be further improved by the bonding member BM.

Furthermore, in the first guiding unit, the second portion may not overlap the first hole and the second hole in the direction perpendicular to the optical axis direction (first direction). That is, in the first guiding unit, the second portion and the housing may overlap in the direction from the first hole toward the second hole. For example, the second portion and the housing may overlap in the first direction.

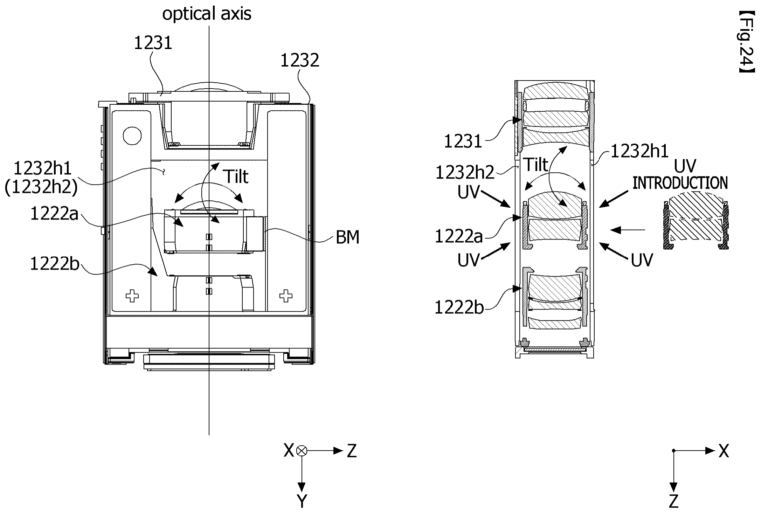

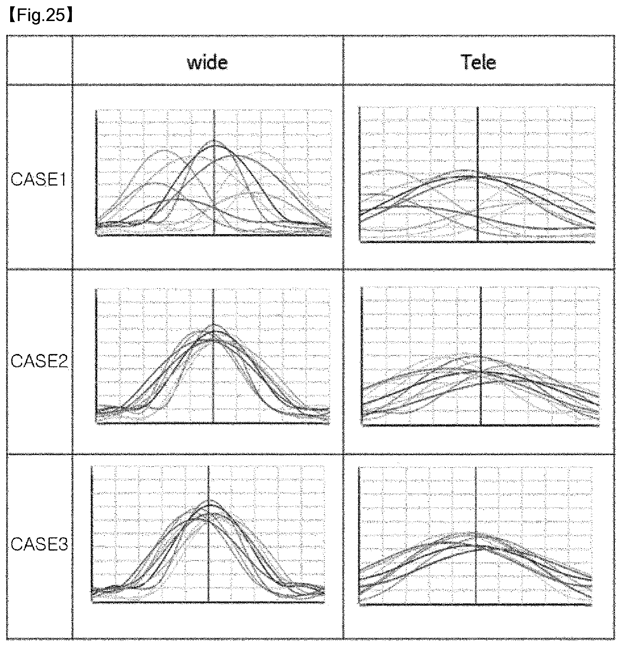

FIG. 24 is a view for describing the combining of the lens holder and the guiding part in the first lens assembly of the second camera actuator according to the embodiment, and FIG. 25 is a graph showing spatial frequency responses (SFRs) in wide and tele states after active alignment according to movement of the fixed assembly and the first lens assembly.

Referring to FIG. 24, as described above, the first bobbin 1222a to which the coupling member BM is bonded (or applied) through at least one of the first hole 1232h1 and the second hole 1232h2 may enter or be introduced into the housing 1232. Further, the second bobbin or the second lens assembly may move (sweep) in the optical axis direction. That is, through focus may be measured. Further, peaks may be detected in the spatial frequency response (SFR). Here, the peaks of the SFR may include peaks in a tangential T direction and a sagittal S direction. Further, tangential T may correspond to vertical V, and sagittal S may correspond to horizontal H.

Further, a value corresponding to a peak of the SFR may correspond to a position of the first lens assembly in the Z-axis direction (optical axis direction). In the SFR, 0 for the X-axis may correspond to an initial position of the first lens assembly. That is, in the SFR, the X-axis corresponds to a position of the first lens assembly in the Z-axis direction.

In an embodiment, the SFR graph is a graph for a region of interest (ROI) of a target. Although there may be at least region of interest (ROI) of the target, the following description will be based on four ROIs (excluding a center). For example, the regions of interest may be located at the left top LT, the right top RT, the left bottom LB, and the right bottom RB with respect to the center of the target. The SFRs may be obtained from the left top LT, the right top RT, the left bottom LB, and the right bottom RB, respectively.

Through the values obtained from each of the regions of interest and the center of the target, an angle for correction may be derived. Afterward, angle correction for the first lens assembly (or first bobbin) may be performed with the derived angle. That is, tilt or decentralization correction on the first bobbin may be performed. As this correction or optical axis alignment is performed, optical performance can be improved, as shown in FIG. 25.

Referring to FIG. 25, CASE1 is an SFR performed before active alignment (AA) correction, CASE2 is an SFR in which AA is performed on a fixed assembly (movement (sweep) of the first bobbin or the second bobbin), and CASE3 is an SFR in which AA is additionally performed on the first bobbin in CASE2. In FIG. 25, the y-axis indicates the SFR value and the x-axis indicates the focus shift distance (for example, in units of mm).

Furthermore, in each CASE, the tolerance between the plurality of lenses in the lens group of each of the fixed assembly, the first lens assembly, and the second lens assembly is ±0.1 degrees for tilt angle and ±5 µm for decentralization. Further, the tilt angle between the groups (between the fixed assembly, the first lens assembly, and the second lens assembly) is ±0.2 degrees and the decentralization is ±20 µm.

With regard to each of the cases, the corresponding SFRs before AA correction (CASE1) means the SFRs in the wide and tele states before the fixed assembly and the first bobbin are corrected at a predetermined angle.

Further, after AA correction for the fixed assembly, the corresponding SFR (CASE2) means the SFR in each state (wide, tele) after tilting or correcting the fixed assembly with a predetermined correction angle.

In this embodiment, wide may correspond to a state in which the first lens assembly (first bobbin) maximally moves in the optical axis direction to the second lens assembly or the image sensor. Alternatively, wide refers to a position of the first lens assembly in a near focal length state or a minimum magnification state. Tele may correspond to a state in which the first lens assembly maximally moves to the fixed assembly or the first camera actuator in the optical axis direction. Alternatively, tele refers to a position of the first lens assembly in a far focal length or a maximum magnification state.

In addition, the corresponding SFR (CASE3) after the additional AA correction means the SFR in each state (wide, tele) after the first bobbin is corrected at a predetermined angle when the second lens assembly (second bobbin) moves (sweeps) after the AA of the fixed assembly.

In the SFR graph in FIG. 25, the y-axis indicates the SFR value percentage. For example, 1 means 100%. Further, the x-axis indicates a Z value or a length in the optical axis direction. Furthermore, different colored lines (dotted lines or solid lines) represent the SFRs in the tangential T (or vertical) direction and the sagittal S (or horizontal) direction from the centers of RT, RB, LT, LB, and ROI.

In this way, CASE3 may reduce a maximum error for the peak of the SFR in at least one of the tele state and the wide state compared to CASE1 and CASE2.

For example, as in CASE3, after the angle correction of the fixed assembly and the first bobbin based on the movement (sweep) of the second bobbin, the maximum error for the peak of the spatial frequency response may be reduced in the tele state and the wide state. That is, the error in the Z value between the peaks of SFRs in the tangential T (or vertical) direction and the sagittal S (or horizontal) direction from the centers of RT, RB, LT, LB, and ROI may be reduced.

In this way, when comparing CASE3 with CASE1 and CASE2, the error in the Z value between the peaks of the SFR before correction of the fixed assembly and the first bobbin (before AA correction) is large, whereas the error in the Z value between the peaks of the SFR after correction of the fixed assembly (after AA correction) may be reduced. Furthermore, the error in the Z value between the peaks of the SFR before correction of the fixed assembly and the first bobbin (before AA correction) is large, whereas the error in the Z value between the peaks of the SFR after correction of the fixed assembly and the first bobbin may be reduced. In addition, the error in the Z value between the peaks of the SFR after correction of the fixed assembly is large, whereas the error in the Z value between the peaks of the SFR after correction of the fixed assembly and the first bobbin may be reduced.

In other words, by additionally performing the AA of the first bobbin on the AA of the fixed assembly, optical performance can be improved.

According to the angle correction (AA correction) of the fixed assembly and the first bobbin described above, the resolution performance deterioration due to sensitivity at high magnification can be improved. It is difficult to improve module resolution with module AA (optical axis alignment between the first and second camera actuators) and only the improvement of balance by field is possible. However, as in the embodiment, by correcting the angle of the fixed assembly and the first bobbin, improved lens performance and yield can be achieved (refer to Table 1). That is, a lens yield can be improved in each state (wide, tele) depending on AA correction. The values in Table 1 are the results of Monte Carlo simulation.

**[Table 1]**

| | | Before fixed assembly correction (tilt) (before AA correction) | | | Fixed assembly correction and first bobbin non-correction | | Fixed assembly and first bobbin correction |
|---|---|---|---|---|---|---|---|
| | Wide | | 71.0% | | 93.0% | | 94.0% |
| | Tele | | 57.0% | | 67.0% | | 72.5% |
| | Total(W+T) | | 50.5% | | 63.0% | | 71.5% |

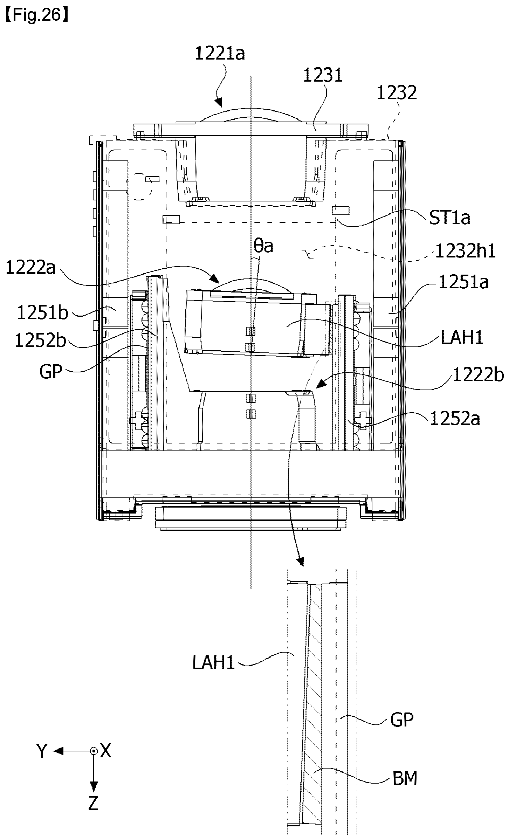

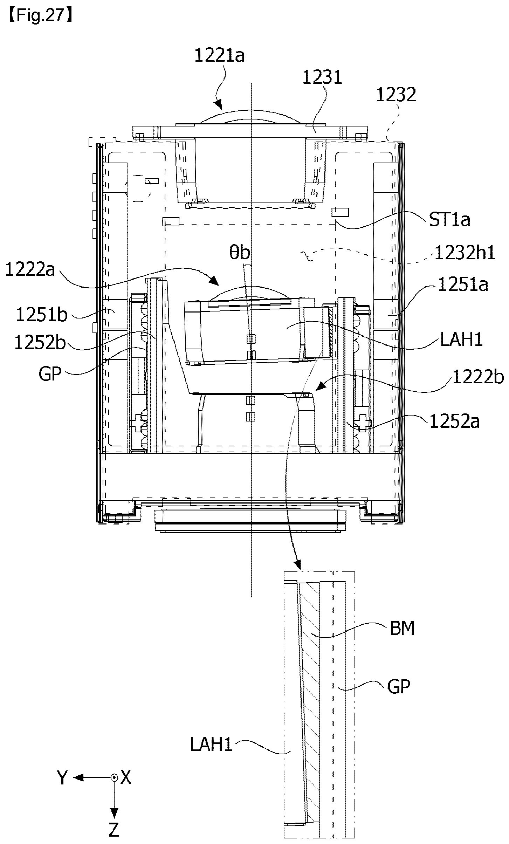

FIG. 26 is a top view of a second camera actuator according to another embodiment and FIG. 27 is a top view of a second camera actuator according to still another embodiment. Referring to FIG. 26, the second camera actuator according to another embodiment may include a moving assembly, a housing, a driving unit, a base unit, a substrate unit, a stopper, and the like. Furthermore, the second camera actuator may further include a shield can (not shown), an elastic unit (not shown), and a coupling member (not shown). In addition, the description of the first lens assembly (or first bobbin) described above in the second camera actuator can be applied equally except for the following contents.

A first lens holder LAH1 of a first bobbin 1222a may be tilted at a predetermined angle in the first direction or the second direction with respect to the optical axis. For example, the first lens holder LAH1 of the first bobbin 1222a may have a first angle θa in the second direction with respect to the optical axis. Accordingly, a separation distance between a first holder outer surface HOS of the first lens holder LAH1 in the first bobbin 1222a and a guiding unit GP may vary in the optical axis direction.

For example, the separation distance between the first holder outer surface HOS of the first lens holder LAH1 and the guiding unit GP may increase in the optical axis direction. Accordingly, a thickness of the bonding member BM may also increase in the optical axis direction in a region thereof coming into contact with the first lens holder or a first groove.

Referring to FIG. 27, the second camera actuator according to still another embodiment may include a moving assembly, a housing, a driving unit, a base unit, a substrate unit, a stopper, and the like. Furthermore, the second camera actuator may further include a shield can (not shown), an elastic unit (not shown), and a coupling member (not shown).

In addition, the description of the first lens assembly (or first bobbin) described above in the second camera actuator can be applied equally, except for the following contents.

A first lens holder LAH1 of a first bobbin 1222a may be tilted at a predetermined angle in the first direction or the second direction with respect to the optical axis. For example, the first lens holder LAH1 of the first bobbin 1222a may have a second angle θb in the second direction with respect to the optical axis. Accordingly, a separation distance between the first holder outer surface HOS of the first lens holder LAH1 in the first bobbin 1222a and a guiding unit GP may vary in the optical axis direction.

For example, the separation distance between the first holder outer surface HOS of the first lens holder LAH1 and the guiding unit GP may decrease in the optical axis direction. Accordingly, a thickness of a bonding member BM may also decrease in the optical axis direction in the region coming into contact with the first lens holder or a first groove.

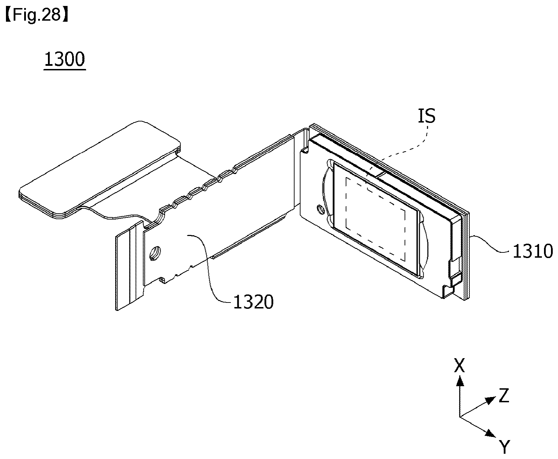

FIG. 28 is a schematic diagram showing a circuit board according to an embodiment.

Referring to FIG. 28, as described above, a circuit board 1300 according to the embodiment may include a first circuit board unit 1310 and a second circuit board unit 1320. The first circuit board unit 1310 may be located below a base and coupled to the base. Furthermore, an image sensor IS may be disposed on the first circuit board unit 1310. Further, the first circuit board unit 1310 and the image sensor IS may be electrically connected. That is, the base may be located at a rear end of the second camera actuator, and the image sensor and the circuit board (first circuit board unit) may be located at a rear end of the base. The base may include a filter (for example, an infrared filter or the like). The circuit board 1300 may include the image sensor and the sensor base described above.

Also, the second circuit board unit 1320 may be located on a side portion of the base. Particularly, the second circuit board unit 1320 may be located on a first side portion of the base. Accordingly, the second circuit board unit 1320 may be located adjacent to a first coil located adjacent to the first side portion to facilitate electrical connection. Additionally, the second circuit board unit 1320 may be located on a second side portion. In this way, a plurality of second circuit board units 1320 may be provided. However, the present invention is not limited thereto and the second circuit board unit 1320 may be disposed on only one of the first side portion and the second side portion.

Furthermore, the circuit board 1300 may additionally include a fixed board (not shown) located on a side surface thereof. Thus, even when the circuit board 1300 is made of a flexible material, the circuit board 1300 may be coupled to the base while maintaining rigidity due to the fixed board.

The second circuit board unit 1320 of the circuit board 1300 may be located on a side portion of a driving unit 1250. The circuit board 1300 may be electrically connected to a first driving unit and a driving unit. For example, electrical connection may be made using SMT. However, the present invention is not limited to such a method.

The circuit board 1300 may include a circuit board having electrically connectable wiring patterns, such as rigid printed circuit boards (rigid PCBs), flexible printed circuit boards (flexible PCBs), and rigid flexible printed circuit boards (rigid flexible PCBs). However, the present invention is not limited to these types.

Additionally, the circuit board 1300 may be electrically connected to another camera module in a terminal or to a processor of the terminal. Through this, the camera actuator described above and the camera module including the same may transmit and receive various signals in the terminal.

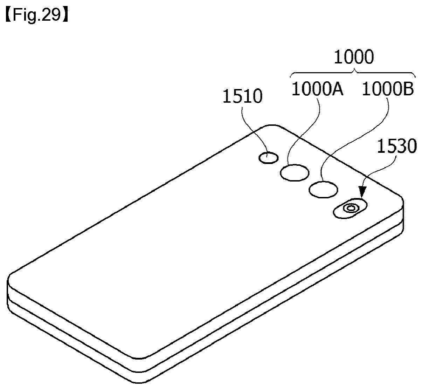

FIG. 29 is a perspective view of a mobile terminal to which the camera module according to the embodiment is applied.

As shown in FIG. 29, a mobile terminal 1500 in the embodiment may include a camera module 1000, a flash module 1530, and an auto-focus device 1510 provided on a rear surface thereof.

The camera module 1000 may include an image capturing function and an auto-focus function. For example, the camera module 1000 may include an auto-focus function using an image.

The camera module 1000 processes image frames of still or moving images obtained by an image sensor in a capturing mode or a video call mode.

The processed image frames may be displayed on a predetermined display unit and stored in a memory. A camera (not shown) may also be disposed on the front of a body of a mobile terminal.

For example, the camera module 1000 may include a first camera module 1000A and a second camera module 1000B, and OIS along with an AF or zoom function may be implemented by the first camera module 1000A.

The flash module 1530 may include a light-emitting element that emits light therein. The flash module 1530 may be operated by the operation of the camera of the mobile terminal or through the user's control.

The auto-focus device 1510 may include one of packages of surface-light-emitting laser devices as a light-emitting unit.

The auto-focus device 1510 may include an auto-focus function using a laser. The auto-focus device 1510 may be mainly used in conditions where it is difficult to use the auto-focus function using the image of the camera module 1000, for example, in a close range of 10 m or less or in a dark environment.

The auto-focus device 1510 may include a light emitting unit including a vertical cavity surface emitting laser (VCSEL) semiconductor device and a light receiving unit that converts light energy into electrical energy, such as a photodiode.

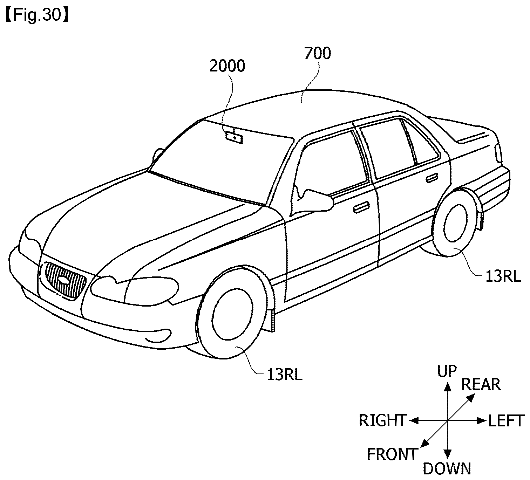

FIG. 30 is a perspective view of a vehicle to which the camera module according to the embodiment is applied.

For example, FIG. 30 is an exterior view of the vehicle including a vehicle driving assistance device to which the camera module 1000 according to the embodiment is applied.

Referring to FIG. 30, a vehicle 700 in the embodiment may include wheels 13FL and 13FR that rotate by a power source and a predetermined sensor. The sensor may be, but is not limited to, a camera sensor 2000.

The camera sensor 2000 may be a camera sensor to which the camera module 1000 according to the embodiment is applied. The vehicle 700 in the embodiment may obtain image information through the camera sensor 2000 that captures a front image or a surrounding image and use the image information to determine a lane non-identification situation and create a virtual lane when the lane is not identified.

For example, the camera sensor 2000 may capture the front of the vehicle 700 to obtain the front image and the processor (not shown) may analyze objects included in the front image to obtain image information.

For example, when objects such as lanes, adjacent vehicles, traffic obstructions, and center dividers, curbs, and street trees which correspond to indirect road markings are captured in the image captured by the camera sensor 2000, the processor may detect these objects and include information regarding these objects in the image information. At this time, the processor may obtain distance information to an object detected through the camera sensor 2000 to further supplement the image information.

The image information may be information regarding an object captured in an image. The camera sensor 2000 may include an image sensor and an image processing module.

The camera sensor 2000 may process still images or moving images obtained by an image sensor (for example, a CMOS or a CCD).

The image processing module may process still images or moving images obtained through an image sensor, extract necessary information, and transmit the extracted information to the processor.

At this time, although the camera sensor 2000 may include a stereo camera to improve the measurement accuracy of the object and secure more information such as the distance between the vehicle 700 and the object, the present invention is not limited thereto.

Although the embodiments have been mainly described above, these are merely examples and are not intended to limit the present invention, and it can be seen by those skilled in the art that various modifications and applications not exemplified herein are possible without departing from the essential characteristics of the present invention. For example, each of the constituent elements specifically shown in the embodiments may be modified and implemented. Further, it should be interpreted that differences related to the modifications and the applications are included in the scope of the present invention defined by the appended claims.

## Claims

1. A camera actuator comprising:
a housing;
a first bobbin disposed in the housing; and
a driving unit configured to move the first bobbin in an optical axis direction,
wherein the first bobbin includes
a first lens holder configured to accommodate a lens;
a first guiding unit disposed on a side portion of the housing; and
a bonding member disposed between the first lens holder and the first guiding unit.

2. The camera actuator of claim 1, wherein the first lens holder includes a first surface that comes into contact with the bonding member, and
the first guiding unit includes a second surface that comes into contact with the bonding member.

3. The camera actuator of claim 2, wherein the first surface includes a first groove, and
the second surface of the first guiding unit includes a second groove.

4. The camera actuator of claim 3, wherein the first groove and the second groove overlap in a direction from the first surface toward the second surface.

5. The camera actuator of claim 3, wherein the first surface includes a first protrusion which is disposed in the first groove, and
the second surface includes a second protrusion which is disposed in the second groove.

6. The camera actuator of claim 5, wherein the first protrusion and the second protrusion overlap in a direction from the first surface toward the second surface.

7. The camera actuator of claim 2, wherein the first guiding unit includes a third surface which is disposed opposite to the second surface; and
the third surface of the first guiding unit faces the side portion of the housing and includes a recess in which a ball is disposed.

8. The camera actuator of claim 2, wherein the side portion of the housing includes a first side portion having an inner surface facing the first guiding unit of the first bobbin and a second side portion opposite to the first side portion.

9. The camera actuator of claim 8, wherein the housing includes an upper surface and a lower surface which are disposed between the first side portion and the second side portion,
the upper surface includes a first hole, and
the lower surface includes a second hole.

10. The camera actuator of claim 9, wherein the bonding member is exposed through at least one of the first hole and the second hole.
